(19) Europäisches Patentamt
European Patent Office
Office européen des brevets

(11) Veröffentlichungsnummer: **0 071 983**
**B1**

(12) # EUROPÄISCHE PATENTSCHRIFT

(45) Veröffentlichungstag der Patentschrift: **10.12.86**

(21) Anmeldenummer: **82107068.7**

(22) Anmeldetag: **05.08.82**

(51) Int. Cl.⁴: **C 10 K 1/20**, C 07 C 7/148, C 01 B 3/56, C 01 B 17/04, B 01 D 53/34

(54) **Verfahren zum Entfernen von Schwefelverbindungen aus Gasen.**

(30) Priorität: **07.08.81 DE 3131257**

(43) Veröffentlichungstag der Anmeldung: **16.02.83 Patentblatt 83/7**

(45) Bekanntmachung des Hinweises auf die Patenterteilung: **10.12.86 Patentblatt 86/50**

(84) Benannte Vertragsstaaten: **AT BE CH DE FR GB IT LI LU NL**

(56) Entgegenhaltungen:
**DE - A - 1 767 202**
**FR - A - 2 277 877**
**FR - A - 2 295 782**
**US - A - 4 039 619**
**US - A - 4 092 404**

**Die Akte enthält technische Angaben, die nach dem Eingang der Anmeldung eingereicht wurden und die nicht in dieser Patentschrift enthalten sind.**

(73) Patentinhaber: **VEG-GASINSTITUUT N.V., Wilmersdorf 50, NL-7327 AC Apeldoorn (NL)**

(72) Erfinder: **van der Wal, Willem J. J., Beukstraat 39, NL-3581 XE Utrecht (NL)**
Erfinder: **Geus, John Wilhelm, Prof., Gezichtslaan 100, NL-3723 GJ Bilthoven (NL)**

(74) Vertreter: **Türk, Dietmar, Dr. rer. nat. et al, Türk, Gille + Hrabal Patentanwälte Bruckner Strasse 20, D-4000 Düsseldorf 13 (DE)**

**EP 0 071 983 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Entfernen von Schwefelverbindungen aus Gasen durch Leiten der Gase über Metalloxide, die mit Schwefelverbindungen unter Bildung von Metall-Schwefelverbindungen reagieren, und Oxidation der Metall-Schwefelverbindungen.

Vor 1940 erfolgte die Entfernung von Schwefelwasserstoff aus Kohlengas, einem wichtigen technischen reduzierenden Gas, durch Umsetzung mit feuchtem Eisenoxid bei Temperaturen unter etwa 100 °C. Wenn die Schwefelaufnahme die Reaktivität des Oxids vermindert hatte, wurde die Absorptionsmasse durch Behandlung mit Luft regeneriert. Durch die Reaktion mit Sauerstoff wurde das entstandene Eisensulfid langsam zu Eisenoxid und elementarem Schwefel umgesetzt. Um die Reaktion zu beschleunigen, wurde die Absorptionsmasse aus dem Reaktor entfernt und auf eine grosse Fläche verteilt. Dies ist ein umständliches Verfahren. Die Regenerierung bei niedrigen Temperaturen dauerte Tage. Eine Oxidation bei höheren Temperaturen führte zu inaktivem Eisenoxid und war deshalb nicht durchführbar. Wegen des langsamen Transports des Schwefelwasserstoffs durch das feuchte Eisenoxid während der Absorption war der Umfang der Umwandlung des Eisenoxids in Eisensulfid gering. Um die zur Verfügung stehende Oberfläche zu erhöhen, war die Absorptionsmasse mit Sägemehl vermischt worden.

Um eine höhere Aufnahme an Schwefel zu erzielen, wurde etwas Sauerstoff dem Kohlengas zugefügt. Das Eisenoxid wirkte dann als ein Katalysator, der eine Reaktion zwischen dem Schwefelwasserstoff und Sauerstoff bei niederen Temperaturen bewirkte. Der entstandene elementare Schwefel verblieb im Eisenoxid und verminderte die katalytische Aktivität. Weil es schwierig war, den abgeschiedenen Schwefel aus der Katalysatormasse zu extrahieren, wurde der entaktivierte Katalysator in der Regel verworfen. Die häufige Erneuerung des Katalysators war naturgemäss technisch nachteilig.

Wegen dieser Nachteile wurde die Entfernung des Schwefelwasserstoffs durch Absorption in flüssiger Phase kontinuierlich durchgeführt. Schwefelwasserstoff wird in organischen Flüssigkeiten wie Methanol oder Alkanolaminen absorbiert. Obwohl dieses Verfahren gegenüber demjenigen mit Eisenoxid Vorteile bringt, hat es einige Nachteile. Kohlengase werden in der Regel anschliessend katalytischen Verfahren unterworfen. Ein wichtiges Beispiel hierfür ist die Methanisierung, und die Methanisierungskatalysatoren sind sehr empfindlich gegenüber einer Vergiftung durch Schwefel. Der Schwefelgehalt des gereinigten Gases muss deshalb extrem niedrig sein. Ein anderes Beispiel ist die Reaktion von CO mit $H_2$ zu Methanol. Mit vielen Flüssigkeiten ist es schwierig, den geforderten äusserst niedrigen Schwefelgehalt zu erzielen.

Ausserdem wird in der Regel gleichzeitig Kohlendioxid absorbiert, und zwar in viel grösserer Menge als Schwefelwasserstoff. Die Abtrennung und Umwandlung von Schwefelwasserstoff, das stark mit Kohlendioxid verdünnt ist, ist schwierig. Grosse Volumina an Flüssigkeiten müssen zirkuliert werden, und der Verlust an in der Regel teuren organischen Lösungsmitteln muss verhindert werden, was zu umfangreichen apparatemässigen Vorrichtungen führt. Schliesslich ist die Umwandlung des abgetrennten Schwefelwasserstoffs im Claus-Verfahren nicht leicht. Im Claus-Verfahren wird Schwefelwasserstoff zu elementarem Schwefel und Wasser oxidiert. Ein Problem dabei ist die Umweltverschmutzung durch die Endgase des Claus-Verfahrens.

Zur Lösung dieser Probleme ist es aus der DE-OS 2 614 307 bekannt, in Brenngasen enthaltenen Schwefelwasserstoff zu elementarem Schwefel bei Temperaturen zwischen 121 und 232 °C zu oxidieren. Den zu behandelnden Gasen wird als Oxidationsmittel Sauerstoff oder Schwefeldioxid zugesetzt. Aufgrund der ungünstigen Verschiebung des Gleichgewichts

$$2H_2S + O_2 \leftrightarrows 2S - H_2O$$

kann die Oxidation eines grossen Anteils des Schwefelwasserstoffs nur bei den oben genannten Temperaturen von 121 bis 232 °C erzielt werden. Bei diesen Temperaturen ist es jedoch schwierig, eine Entaktivierung des Katalysators durch Ablagerung von kondensierendem Schwefel zu vermeiden. Deshalb muss der Dampfdruck sehr niedrig gehalten werden. Deshalb können die Gasmischungen, die geringe Mengen Schwefelwasserstoff enthalten, nur bei relativ niedrigen Drucken verarbeitet werden. Da, wie bereits oben dargelegt, Eisenoxid als Katalysator bei 121 bis 232 °C ungeeignet ist, werden gemäss DE-OS 2 614 307 reduzierte Oxide und/oder Sulfide von Metallen der Gruppen VA und VIA des periodischen Systems auf einem nichtalkalischen, porösen, feuerfesten Oxid verwendet. Die Oxidation ergibt elementaren Schwefel, der aus dem Gasstrom abgetrennt wird. Als bevorzugter Katalysator wird Vanadiumpentoxid in einer Menge von 2 bis 20 Gew.% auf Aluminiumoxid oder einem Molekularsieb erwähnt.

Die DE-OS 2 614 307 betrifft hauptsächlich die Entfernung von Schwefelwasserstoff aus Endgasen des Claus-Verfahrens und saueren Naturgasen. Das Verfahren ist jedoch nicht gut anwendbar auf Gase, die einen hohen Anteil Kohlenmonoxid enthalten. Van Dillen (Doktorarbeit, Utrecht, 1977) hat gezeigt, dass reduziertes Vanadiumpentoxid die Reaktion von Kohlenmonoxid zu Kohlenstoff stark beschleunigt:

$$2CO \rightarrow C + CO_2$$

Deshalb wird Kohlenstoff auf dem Vanadiumoxid abgelagert, und der Katalysator wird entaktiviert. Van Dillen hat gezeigt, dass auch auf Siliciumdioxid niedergeschlagenes Vanadiumpentoxid diese Reaktion eingeht. Analoge Schwierigkeiten treten mit den anderen Oxiden auf, die in der DE-OS 2 614 307 genannt sind.

Die technisch bedeutsamsten Verfahren zur Entfernung von Schwefelwasserstoff sind die oben erwähnten Absorptionsverfahren mit Lösungsmitteln, wobei man auf 80 °C oder darunter abkühlen muss. So niedrige Temperaturen sind aber insbesondere bei der Verarbeitung von Kohlengas unvorteilhaft. Die Kohlenvergasung wird bei hohen Temperaturen von 800 bis 1500 °C durchgeführt. Um den Schwefelwasserstoff nach dem bekannten Verfahren aus dem rohen Gas zu entfernen, muss auf sehr niedrige Temperaturen abgekühlt werden. Die sich daran anschliessenden technischen katalytischen Prozesse werden wiederum bei hohen Temperaturen von mindestens etwa 200 °C durchgeführt, so dass also die Gase nach der Entschwefelung wieder erhitzt werden müssen. Die Verwendung des hohen Wärmegehalts der Rohgase erfordert umfangreiche Apparaturen. Vor der Reinigung des Rohgases gemäss dem Verfahren des Stands der Technik musste zudem Dampf praktisch vollständig entfernt werden, der zur Kohlenvergasung zugesetzt worden war. Auch diese Entfernung des Dampfes ist ein Nachteil für die sich anschliessenden katalytischen Verfahren, z.B. die Kohlenmonoxid-Shift-Umwandlung, da hierfür wesentliche Mengen Dampf erforderlich sind.

Wie oben dargelegt, kann Eisenoxid bei höheren Temperaturen nicht eingesetzt werden, da es schnell entaktiviert wird. Die Entaktivierung der Eisenoxid-Absorptionsmassen erfolgt besonders schnell in reduzierenden Gasen, da Wasserstoff und/oder Kohlenmonoxid, die in den Gasen enthalten sind, das Eisenoxid schnell zum Metall reduzieren. Metallisches Eisen sintert schnell, und das führt zu einem merklichen Schrumpf der Absorptionsmassen und einem beträchtlichen Verlust an Oberfläche. Gemäss US-PS 4 155 990 soll deshalb eine Eisenoxidabsorptionsmasse verwendet werden, in der das Eisenoxid mit einem thermostabilen, inerten Oxid wie Siliciumdioxid oder Aluminiumoxid vermischt ist. Diese Absorptionsmassen gestatten die Entfernung des Schwefelwasserstoffs bei Temperaturen über 600 °C. Die Regeneration der Absorptionsmasse erfolgt bei Temperaturen über etwa 700 °C; Sauerstoff oxidiert das Eisensulfid zu Eisenoxid und Schwefeldioxid.

Obwohl das Beimischen eines nicht-reduzierbaren, thermostabilen Oxids den Schrumpf der Absorptionsmasse verhindert, ist das Verfahren der US-PS 4 155 990 nicht problemfrei. Um einen beträchtlichen Anteil des Eisenoxids in das Sulfid umzuwandeln, ist eine Temperatur von mindestens etwa 600 °C erforderlich. Die Regenerierung von dicken Eisensulfid-Schichten durch Umsetzen mit Sauerstoff erfordert ebenfalls hohe Temperaturen. Sich anschliessende technische katalytische Prozesse zur Umwandlung von Kohlengas in Wasserstoff oder Methan erfordern Eingangstemperaturen von 300 bis 500 °C. Im Gegensatz zu den Tieftemperatur-Verfahren, die oben erörtert wurden, wird hier eine zusätzliche Kühlung des gereinigten Gases erforderlich. Der optimale Temperaturbereich, der zur Entfernung von Schwefelwasserstoff aus reduzierenden Gasen wie Kohlengas angewandt werden sollte, liegt deshalb bei etwa 300 bis 500 °C.

Ein grösserer Nachteil beim Verfahren der US-PS 4 155 990 ist die Gegenwart von reduziertem Eisen in der Absorptionsmasse. In Abhängigkeit von dem Druck und der Zusammensetzung des zu reinigenden Gases kann das darin enthaltene Kohlenmonoxid am reduzierten Eisen schnell einer Disproportionierung unter Bildung von Kohlenstoff und Kohlendioxid bei Temperaturen von etwa 600 °C unterworfen werden. Selbst bei Temperaturen bis zu 800 °C kann die Bildung von Kohlenstoff erfolgen. Die Abscheidung von Kohlenstoff führt zur Entaktivierung und zur Verstopfung der Absorptionsmasse. Kohlenstoff wird besonders in den Bereichen der Absorptionsmasse abgeschieden, wo Schwefel noch nicht aufgenommen worden ist. Unabhängig hiervon müssen Eisenoxid-Katalysatoren sehr sorgfältig mit Kohlenmonoxid enthaltenden Gasen behandelt werden, da bei Temperaturen unter etwa 200 °C Eisencarbonyl-Verbindungen gebildet werden können, die äusserst unerwünscht sind.

In der DE-OS 2 144 567 ist die Entschwefelung von Kohlenwasserstoffen mit einer Entschwefelungsmasse beschrieben, die aus einem porösen Träger mit hoher spezifischer Oberfläche besteht, auf dem zweiwertiges Kupferoxid aufgebracht ist. Diese Masse wird dadurch hergestellt, dass das poröse Trägermaterial mit einer wässrigen Kupfersalzlösung imprägniert und getrocknet wird. Dabei erhält man eine Masse, die, auch nach dem Kalzinieren, das Kupferoxid in groben Körnern enthält, wie dies auch für die oben beschriebenen anderen bekannten Reaktionsmassen gilt. Die Entschwefelung mit dieser Masse kann deshalb nur bei verhältnismässig niedrigen Temperaturen durchgeführt werden, da bei höheren Temperaturen die Masse sintert. Das Regenerieren ist umständlich und erfordert mehrere Verfahrensschritte. Die Menge an aufgenommenem Schwefel sinkt stark mit zunehmender Anzahl Regenerierungen (vergleiche Beispiel 5 der DE-OS 2 144 567).

Der vorliegenden Erfindung liegt die Aufgabenstellung zugrunde die obigen Nachteile möglichst weitgehend zu vermeiden und ein sicheres und technisch einfaches Verfahren zum Entfernen von Schwefelverbindungen aus Gasen zu finden. Der Erfindung liegt ausserdem die Aufgabenstellung zugrunde, bei der Regenerierung der Absorptionsmasse Schwefel oder schwefelhaltige Verbindungen in höherer Konzentration zu gewinnen, was bisher schwierig war. Dadurch wird die sonst erforderliche Aufkonzentration vermieden. Gegenstand der vorliegenden Erfindung ist demgemäss ein Verfahren zum Entfernen von Schwefelverbindungen, insbesondere Schwefelwasserstoff, aus Gasen durch Leiten der Gase über eine Absorptionsmasse enthaltend Metalloxide, die mit den Schwefelverbindungen unter Bildung von Metall-Schwefelverbindungen reagieren, und Regenerieren der Absorptionsmasse durch Oxidation der Metall-Schwefelverbindungen, das dadurch gekennzeichnet ist, dass

a) sich die Metalloxide auf einem inerten, feuerfesten Träger befinden, der eine spezifische Oberfläche von mehr als 10 $m^2$ pro g besitzt,

b) der Träger mit dem Metalloxid in einer Menge von mindestens 5 Gew.%, gerechnet als Metall der aktiven Komponente und bezogen auf das Gewicht des Trägers, beladen ist,

c) mindestens 20 Gew.% der auf dem Träger befindlichen Metalloxide in fein verteilter Form mit einer Teilchengrösse von weniger als 40 nm vorliegen,

d) und man die Gase über die Metalloxid-beladenen Träger bei einer Temperatur von 5 bis 800 °C leitet

e) und man den mit Metall-Schwefelverbindungen beladenen Träger durch Überleiten von Oxidationsmittel enthaltenden Gasen regeneriert.

Aus DE-A-2 558 905 ist eine Reaktionsmasse bekannt, die inerte, feuerfeste Materialien wie Aluminiumoxid und gegebenenfalls Siliciumdioxid in innigem Gemisch mit Zinkoxid enthält. Diese Kontaktmasse enthält nebeneinander Teilchen von Zinkoxid, Aluminiumoxid und Siliciumdioxid, wobei das Zinkoxid durch die inerten Trägerteilchen verdünnt ist. Im Gegensatz hierzu enthält die Absorptionsmasse gemäss der Erfindung das aktive Metalloxid in Form äusserst fein verteilter Teilchen, wie oben definiert, auf der Oberfläche der Trägerteilchen, d.h. der Träger mit grosser Oberfläche ist mit der aktiven Komponente in äusserst fein verteilter Form beladen.

Geeignete Metalloxide, die auf dem Träger niedergeschlagen sind, können aufgrund bekannter thermodynamischen Daten ermittelt werden. Es wird hierzu verwiesen auf P.R. Westmoreland and D.P. Harrison, Environmental Science and Technology, 10 (7) (1976) p. 659–661. Beispiele für geeignete Oxide sind diejenigen von Chrom, Kobalt, Kupfer, Eisen, Mangan und Vanadium. Während die Reduktion der bisher für das Verfahren zum Entfernen von Schwefelwasserstoff eingesetzten Oxide zu einem starken Sintern führt, wie oben dargelegt, ist dies überraschend bei den gemäss der Erfindung verwendeten Oxiden, die in fein verteilter Form auf Trägern niedergeschlagen sind, nicht der Fall.

Deshalb können z.B. Kobalt- und Kupferoxid, die leicht zu den entsprechenden Metallen reduziert werden, praktisch problemlos für das Verfahren gemäss der Erfindung eingesetzt werden. Kupferoxid ist besonders interessant, da es die Disproportionierung von Kohlenmonoxid nicht merklich katalysiert. Es tritt deshalb keine merkliche Abscheidung von Kohlenstoff und damit Entaktivierung der Absorptionsmasse auf.

Aufgrund der feinen Verteilung auf dem Trägerstoff ist der Schmelzpunkt des Metalls nicht von grosser Bedeutung. Die Metallteilchen, die sich im wesentlichen nicht berühren, sintern kaum. Deshalb können auch die Oxide von Wismut, Cadmium, Blei und Zinn verwendet werden. Die Metalloxide werden beim Überleiten der Gase bei der Temperatur der Entschwefelung, 5 bis 800 °C, reduziert. Wie bereits dargelegt, beschleunigen sie nicht die Disproportionierung von Kohlenmonoxid, was ausserordentlich vorteilhaft ist. Überraschenderweise tritt bei der Entschwefelung keine wesentliche Sinterung der Metalloxide ein, die in fein verteilter Form auf der Oberfläche der thermostabilen Trägerstoffe niedergeschlagen sind. Es tritt deshalb überraschenderweise kein wesentlicher Schrumpf der Absorptionsmasse während des Gebrauchs auf. Ein weiterer Vorteil der gemäss der Erfindung verwendeten Absorptionsmasse liegt darin, dass keine Desintegration der Metallteilchen oder Metalloxidteilchen während des Beladens mit Schwefel und der Regenerierung erfolgt. Grosse Teilchen dieser Feststoffe werden nach mehreren Zyklen des Beladens und Regenerierens zerbrochen. Die dabei gebildeten äusserst kleinen Teilchen werden mit dem Gasstrom weggetragen. Beim Verfahren gemäss der Erfindung tritt eine solche Desintegration der Absorptionsmasse praktisch nicht auf.

Ein weiterer Vorteil der Verwendung der Absorptionsmasse aus fein verteiltem Metall oder Metalloxid auf dem Trägerstoff liegt darin, dass die Reaktivität beträchtlich grösser ist als die von grossen Kristalliten. Sofern grosse Kristallite nicht zerbrochen werden, was aus den oben dargelegten Gründen unvorteilhaft ist, müssen die Sulfidionen und die Sauerstoffionen durch grosse Schichtdicken transportiert werden, wenn ein beträchtlicher Anteil des Metall (oxids) mit dem entsprechenden Sulfid reagieren soll. Dementsprechend können für das Verfahren gemäss der Erfindung auch Metalle oder Metalloxide eingesetzt werden, die zu dichten Sulfidschichten reagieren. Das grosse Oberfläche/Volumen-Verhältnis der gemäss der Erfindung eingesetzten Absorptionsmassen hat ein grosses Schwefel/Metall-Verhältnis zur Folge, das bereits bei niedrigen Temperaturen erhalten werden kann. Schon bei etwa 300 °C kann ein Schwefel/Metall-Verhältnis von 0.8 (Atom/Atom) erhalten werden. Das grosse Oberfläche/Volumen-Verhältnis gestattet auch die Regenerierung bei niedrigen Temperaturen. Zur vollständigen Regenerierung der Absorptionsmassen sind in der Regel Temperaturen unter etwa 500 °C ausreichend.

Wie oben bereits dargelegt, ist die Bildung von Metallen oder Metalloxiden, die die Disproportionierung von Kohlenmonoxid katalysieren, sehr unerwünscht. Die Abscheidung von Kohlenstoff entaktiviert die Absorptionsmasse und kann zur Verstopfung des Absorptionsreaktors führen. Deshalb können Eisenoxide und Vanadiumoxide nicht für Gasmischungen verwendet werden, die wesentliche Mengen Kohlenmonoxid enthalten. Dies gilt für die gemäss dem Stand der Technik eingesetzten Absorptionsmassen. Da Eisenoxid leicht zugänglich und äusserst billig ist, ist dies ausserordentlich unglücklich. Überraschenderweise wurde nun gefunden, dass bei Verwendung von Absorptionsmassen gemäss der Erfindung diese Schwierigkeiten auch dann nicht auftreten, wenn sie als Metalloxid Eisenoxid oder Vanadiumoxid enthalten. Überraschenderweise verlieren Eisenoxid und Vanadiumoxid, wenn sie in der oben definierten feinen Form auf einem oxidischen Träger niedergeschlagen sind, ihre Aktivität zur Disproportionierung von Kohlenmonoxid. Deshalb können für das Verfahren gemäss der Erfindung also auch Eisenoxid und Vanadiumoxid enthaltende Absorptionsmassen für Gasgemische eingesetzt werden, die wesentliche Mengen Kohlenmonoxid enthalten.

Die Verwendung von Eisenoxid-Absorptionsmassen gemäss der Erfindung hat den zusätzlichen Vorteil, dass bei deren Regenerierung unmittelbar elementarer Schwefel erhalten wird, wie später noch genauer erläutert wird. Diese Absorptionsmassen haben deshalb gegenüber dem bekannten technisch in grossem Umfang verwendeten Verfahren der physikalischen Absorption des Schwefelwasserstoffs in Lösungsmitteln den besonderen Vorteil, dass in einer Stufe beim Regenerieren der beladenen Absorptionsmasse unmittelbar Schwefel erhalten wird, während nach dem Stand der Technik zunächst aus dem flüssigen Absorptionsmittel der Schwefelwasserstoff ausgetrieben und in einem zusätzlichen bekannten Verfahren zu Schwefel weiterverarbeitet werden muss. Die Absorption mit flüssigen Absorptionsmitteln erfordert schon umfangreiche teure Anlagen; es sind Absorptionstürme von 15 bis 25 m Höhe erforderlich. Zusätzlich müssen die umfangreichen und teuren Anlagen zur Gewinnung von Schwefel aus Schwefelwasserstoff erstellt und betrieben werden. Gemäss der Erfindung reicht dagegen ein relativ kleiner Absorptionsreaktor aus.

Als inerte, feuerfeste, bzw. thermostabile Trägerstoffe können viele Verbindungen gemäss der Erfindung eingesetzt werden, sofern sie eine grosse spezifische Oberfläche besitzen. Es können die aus dem Stand der Technik bekannten Produkte wie Aluminiumoxid, Siliciumdioxid, Siliciumdioxid-Aluminiumoxid, Siliciumdioxid-Magnesiumoxid, Zirkondioxid, Siliciumdioxid-Zirkondioxid, Titanoxid, Siliciumdioxid-Zirkondioxid-Titandioxid, kristalline oder amorphe Alumino-silikat-Molekularsiebe und Metallphosphate verwendet werden.

Es ist bevorzugt, dass der Träger mit dem Metalloxid in einer Menge von mindestens 20 Gew.%, vorzugsweise mindestens 40 Gew.% berechnet als Metall der aktiven Komponente und bezogen auf das Gewicht des Trägers, beladen ist.

Es ist weiterhin bevorzugt, dass mindestens 50 Gew.% der auf dem Träger befindlichen Metalloxide mit der oben definierten Teilchengrösse von weniger als 40 nm, vorzugsweise weniger als 20 nm vorliegen.

Besonders bevorzugt liegt die genannte Menge in einer Teilchengrösse unter 15 nm. Noch stärker bevorzugt liegt sie unter 10 nm, da dann die Absorption und Regenerierung schnell und vollständig verläuft. Die untere Grenze für die Teilchengrösse ist nicht besonders wesentlich und liegt bei etwa 1 nm, vorzugsweise bei 3 nm. Wenn die Teilchengrösse der Metalloxide darunter liegt, kann eine weitgehende Reaktion mit dem oxidischen Träger erfolgen. Mit Siliciumdioxid kann sich z.B. Eisenhydrosilikat oder Kupferhydrosilikat bilden, und mit Aluminiumoxid kann sich Eisen-(II)Aluminat oder Kupfer-(II)Aluminat bilden. Diese mit den oxidischen Trägern gebildeten Verbindungen reagieren in der Regel nicht so gut mit Schwefelwasserstoff, wie die Metalloxide, und deren Bildung sollte nach Möglichkeit vermieden werden. Deshalb sollte die Teilchengrösse der Metalloxide, die die aktiven Stoffe bilden, über etwa 1 nm in Abhängigkeit von der Art des jeweiligen Metalloxids und des Trägers und des Herstellungsverfahrens liegen. Da z.B. Eisen-(III) weniger leicht mit dem Siliciumdioxid reagiert als Eisen-(II), kann die Teilchengrösse von Eisen-(III)-(hydr)oxid-Teilchen niedriger liegen. Andererseits reagiert Vanadiumpentoxid kaum mit Aluminiumoxid bei Temperaturen unter etwa 600 °C. Bei Verwendung von Vanadiumpentoxid auf Aluminiumoxid kann eine fast monomolekulare Schicht verwendet werden. Die untere Grenze für die Teilchengrösse hängt deshalb von der Natur der Metalloxid-Trägerstoff-Kombination ab und kann leicht ermittelt werden.

Das dem Verfahren der Erfindung unterworfene Gas kann auch ein Kohlengas sein, das zunächst durch einen schwefelbeständigen Kohlenmonoxid-Shift-Katalysator geleitet wurde. Es wird dann ein Gasgemisch erhalten, das im wesentlichen Wasserstoff, Kohlendioxid und Dampf enthält. Der darin als Verunreinigung enthaltene Schwefelwasserstoff kann gemäss dem Verfahren der Erfindung entfernt werden.

Das Verfahren der Erfindung kann vorteilhaft u.a. auch zur Entfernung von Schwefelverbindungen aus Erdgasen angewandt werden. Auch in diesem Fall kann innerhalb des gesamten oben definierten Temperaturbereichs von 5 bis 800 °C gearbeitet werden. Es ist möglich, dass Erdgas, so wie es anfällt, d.h. auch mit der jeweils vorliegenden Temperatur, dem Verfahren der Erfindung zu unterwerfen. Es ist aber auch möglich es zu erwärmen, da dann die Absorptionskapazität und -Geschwindigkeit erhöht sind. Bevorzugt sind im allgemeinen Temperaturen von 200 bis 800 °C bei der Absorption, besonders bevorzugt von 300 bis 600 °C.

Unter Schwefelverbindungen, die in den gemäss der Erfindung behandelten Gasen enthalten sind, werden alle diejenigen Schwefelverbindungen verstanden, die in derartigen zu reinigenden Gasen enthalten sind und zweckmässig entfernt werden sollen. Die am häufigsten vorkommende derartige Schwefelverbindung ist Schwefelwasserstoff. Ausserdem ist wichtig, wenn auch nicht in diesem Umfang, COS. Sonstige Schwefelverbindungen liegen in der Regel nur in äusserst geringer Menge im Verhältnis zu den vorgenannten Schwefelwasserstoff und COS vor. Beispiele hierfür sind $CS_2$, Merkaptane, Thiophen, usw., wie dies dem Fachmann bekannt ist. Falls in Ausnahmefällen diese zuletzt genannten Verbindungen in grösserer Menge vorliegen sollten, müssten, wie dies auf diesem Gebiet der Technik bekannt ist, diese Verbindungen nach an sich bekannten Verfahren zunächst weitgehend entfernt werden, ehe die Gase dem Verfahren der Erfindung unterworfen werden.

Das Regenerieren der Absorptionsmassen erfolgt vorzugsweise in einer anderen Stufe als die Entschwefelung der Gase, wie dies später beschrieben wird. Das Regenerieren kann aber gemäss der Erfindung auch gleichzeitig dadurch erfolgen, dass Oxidationsmittel zusammen mit den zu entschwefelnden Gasen über die Absorptionsmasse geleitet werden. Die zu entschwefelnden Gase enthalten also Oxidationsmittel, die gegebenenfalls den zur Verfügung stehenden Gasen zugesetzt werden. Das geeignetste und einfachste Oxidationsmittel ist auch in diesem Fall Sauerstoff. Es ist aber dabei darauf zu achten, dass die Menge an Sauerstoff bzw. Oxidationsmittel nicht grösser ist, als erforderlich ist, um den Schwefel aus der Absorptionsmasse wieder freizusetzen. Diese Ausführungsform des Verfahrens gemäss der Erfindung ist also dadurch gekennzeichnet, dass die die Schwefelverbindungen enthaltenden Gase Sauerstoff in einer solchen Menge enthalten, dass das Atomverhältnis von Sauerstoff zu Schwefel nicht grösser als 1 ist. Man muss also die Oxidationsmittelmenge so wählen, dass kein Schwefeldioxid entsteht, da dieses sonst in dem behandelten Gas vorliegen würde, was nicht gewünscht ist. Zweckmässig wird die Absorption der Schwefelverbindungen unter gleichzeitiger Regeneration so gesteuert, dass bei der gleichzeitigen Regeneration elementarer Schwefel gebildet wird, der aus den behandelten Gasen in an sich bekannter Weise einfach abgetrennt werden kann.

Die gemäss der Erfindung verwendeten Absorptionsmassen sind an sich bekannt, wurden jedoch bisher nicht für das Verfahren gemäss der Erfindung verwendet.

Die gemäss der Erfindung verwendeten Absorptionsmassen können nach den folgenden Verfahren erhalten werden:

Methode A

Coprecipitation von einem Precursor des aktiven Materials und dem Träger.

Man erhält in der Regel Produkte, die bei erhöhten Temperaturen zersetzt werden müssen, wobei sich der Trägerstoff und das aktive Oxid bilden. Meistens ist die poröse Struktur des so hergestellten Materials nicht geeignet für eine schnelle Wanderung der zu absorbierenden Produkte durch die Absorptionsmasse. Diese Nachteile treten jedoch nicht auf, wenn man die Coprecipitation des aktiven Precursors in Form von Oxalaten oder Formaten mit Magnesiumoxalat oder -format durchführt. Die Oxalate werden bei Temperaturen unter 500°C zersetzt, wobei fein verteilte Oxide der Metalle auf Magnesiumoxid als Träger erhalten werden. Dieses Verfahren ist im einzelnen beschrieben von W. Langenbeck, H. Dreyer und D. Nehring, Naturwissenschaften, 41 (1954) 332; W. Langenbeck, H. Dreyer und D. Nehring und J. Welker, Zeitschr. anorg. allgem. Chem., 281 (1955) 90. Es ist z.B. anwendbar auf die Oxide von Kupfer, Kobalt, Nickel und Eisen-(II). Herstellungsbeispiele für die Herstellung von Absorptionsmassen werden später gegeben.

Methode B

Es handelt sich um das in der DE-PS 1 767 202 beschriebene Verfahren, bei dem Precursoren der aktiven Komponenten in äusserst feiner Verteilung auf den suspendierten Trägerstoff niedergeschlagen werden. Dieses Verfahren ist z.B. besonders geeignet für die Herstellung von Absorptionsmassen mit Kupfer, Kobalt, Zinn oder Nickel als aktiver Komponente auf Siliciumdioxid oder Aluminiumoxid als Träger. Wie bereits oben dargelegt, können Eisen-(III) Niederschläge nach diesem Verfahren schwierig oder nicht erhalten werden. Dagegen führt die Ausfällung von Eisen-(II) zu ausgezeichneten Absorptionsmassen zur Verwendung für das Verfahren gemäss der Erfindung.

Methode C

Es handelt sich um ein Verfahren zur Herstellung eines Eisen-(III)-Oxid-Katalysators oder -Absorptionsmittels, bei dem man aus einer Eisensalzlösung das Eisen mittels Hydroxylionen in Gegenwart eines Trägers ausfällt, den beladenen Träger trocknet und gegebenenfalls glüht, wobei man in die Suspension des Trägers unter lebhaftem Rühren eine Lösung eines Eisen-(III)-Salzes unter die Oberfläche oder Suspension einleitet und den pH-Wert der Suspension zwischen 4 und 7 hält und den beladenen Träger aus der Lösung abtrennt. Vorzugsweise wird der pH-Wert der Suspension zwischen 5.5 und 6.5 gehalten. Es ist weiterhin bevorzugt, dass in der Suspension kontinuierlich durch eine an sich bekannte chemische Reaktion Hydroxylionen erzeugt werden, die zur Ausfällung des gegebenenfalls hydratisierten Metalloxides benötigt werden. Nach einer weiteren bevorzugten Ausführungsform arbeitet man derart, dass man den pH-Wert der Suspension kontinuierlich misst und über Regel- und Stellglieder die Zufuhr der Eisen-(III)-Salzlösung und gegebenenfalls der Alkalilösung so steuert, dass der pH-Wert der Suspension im gewünschten Bereich gehalten wird.

Dieses Verfahren ist im einzelnen beschrieben in der deutschen Patentanmeldung P 3 131 255.1.

Es wurde gefunden, dass die gemäss der Erfindung verwendeten Absorptionsmassen bis zu mehr als 10 000 mal beladen und regeneriert werden können, ohne dass die Absorptionskapazität wesentlich abnimmt und eine wesentliche Desintegration des Absorptionsmittels oder ein Schrumpf des Absorptionsmittels eintritt. Es wird dazu auf die Beispiele und das Vergleichsbeispiel mit Eisenoxid ohne Verwendung eines Trägerstoffes verwiesen.

Das Verfahren gemäss der Erfindung ist vorzugsweise auf reduzierende Gase anwendbar, die geringe Mengen Schwefelwasserstoff enthalten. Bevorzugt handelt es sich bei den reduzierenden Gasen um Kohlengas. Dieses enthält als Trockengas in der Regel folgende Komponenten:

25 –50% $H_2$
18 –70% CO
2 –30% $CO_2$

0 –15% $CH_4$
0.01– 5% $H_2S$
<– 2% COS, $CS_2$, HCl, $NH_3$ etc.

Für die technische Verwendung dieser Gase für weitere Verarbeitungsschritte ist es ausserordentlich wichtig, dass der Schwefelwasserstoff so weit als möglich entfernt wird, wie oben bei der Schilderung des Stands der Technik bereits dargelegt wurde. Gemäss dem Verfahren der Erfindung wird in ausserordentlich einfacher Weise eine äusserst weitgehende Entfernung des Schwefelwasserstoffs erreicht. Der besondere Vorteil des Verfahrens gemäss der Erfindung liegt darin, dass die Regenerierung der Absorptionsmassen in ebenfalls äusserst einfacher Weise unter Herstellung umweltfreundlicher Produkte, insbesondere elementarem Schwefel bei Verwendung von Eisenoxid als aktiver Komponente für die Absorptionsmasse, möglich ist. Die Temperatur bei der Absorption kann in weiten Grenzen schwanken und damit den vorhandenen Verhältnissen, d.h. der Temperatur der zu entschwefelnden Gase angepasst werden. Dies ist ein besonderer Vorteil des Verfahrens gemäss der Erfindung. In der Regel wird die Absorption des Schwefelwasserstoffs bei Temperaturen von etwa 200 bis 700 °C, vorzugsweise von etwa 300 bis 600 °C durchgeführt.

Die Regenerierung wird in der Regel mit einem Gasstrom durchgeführt, der weniger als 6 Vol.%, vorzugsweise weniger als 5 Vol.% Oxidationsmittel enthält. In vielen Fällen wird Sauerstoff als Oxidationsmittel verwendet, weil er am leichtesten zugänglich ist. Es können aber auch Schwefeldioxid und Stickoxide eingesetzt werden. Schwefeldioxid ist besonders dann bevorzugt, wenn es aus anderen Gründen zur Verfügung steht. Die untere Grenze für den Gehalt des Oxidationsmittels im Regeneriergas ist nicht besonders beschränkt; sie muss jedoch so gross sein, dass eine Regenerierung in wirtschaftlich tragbarer Zeit erhalten wird. Unter diesem Gesichtspunkt liegt die untere Grenze für das Oxidationsmittel bei etwa 0.1 Vol%. Gute Ergebnisse werden in der Regel erhalten, wenn das Oxidationsmittel, insbesondere Sauerstoff, in einer Menge von etwa 0.3 bis 4.0, vorzugsweise 0.5 bis 2.5 Vol.% im Gasstrom für die Regenerierung vorliegt. Bei der Regenerierung erhält man in der Regel Schwefeldioxid. Überraschenderweise erhält man bei Kupfer(II)-oxid-Absorptionsmassen bzw. Katalysatormassen fast ausschliesslich Schwefeltrioxid.

Bei der Regenerierung von gemäss der Erfindung verwendeten eisenoxidhaltigen Absorptionsmassen bzw. Katalysatormassen tritt eine überraschende Reaktion ein. Wenn man die mit Schwefel beladene Absorptionsmasse durch Überleiten eines Gasstroms enthaltend ein Oxidationsmittel regeneriert, wird der gebundene Schwefel vollständig zu elementarem Schwefel oxidiert. Diese Reaktion erfolgt bei Temperaturen von Raumtemperatur, d.h. etwa 20 °C, bis zu etwa 700 °C. Wenn man zunächst die Oxidation bei Temperaturen unter etwa 200 °C durchführt, wird der Schwefel nur zu einem geringen Anteil durch den Gasstrom weggetragen. Es ist dann erforderlich mittels eines Inertgases wie Stickstoff oder Kohlendioxid den Schwefel bei höheren Temperaturen über etwa 300 °C, auf die die Absorptionsmasse erhitzt wird, abzutreiben. Der Schwefeldampf wird dann anschliessend aus dem Inertgas kondensiert. Wenn die Oxidation bei Temperaturen über etwa 300 °C durchgeführt wird, wird der gebildete elementare Schwefel mit dem Gasstrom aus der Absorptionsmasse weggetragen. Es ist dabei lediglich darauf zu achten, dass die Oxidationstemperatur und die Menge des Oxidationsmittels im zum Regenerieren verwendeten Gasstrom so aufeinander eingestellt werden, dass eine weitergehende Oxidation zu Schwefeldioxid vermieden wird. Deshalb ist besonders am Ende der Regenerierstufe darauf zu achten, dass der Sauerstoffgehalt (Sauerstoff wird als Oxidationsmittel bevorzugt) unter etwa 0.5 Vol.% liegt, wenn die Temperatur der Absorptionsmasse 500 °C beträgt. Durch wenige Versuche kann der geeignete Temperaturbereich und Sauerstoffgehalt am Ende der Regenerierstufe ermittelt werden, bei dem eine unerwünschte Oxidation zu Schwefeldioxid vermieden wird, wenn man nur Schwefel als Reaktionsprodukt erhalten möchte.

Gemäss dem Stand der Technik konnte bisher nicht unmittelbar Schwefel durch Regenerieren von Absorptionsmitteln im Sinne der Erfindung erhalten werden. Das erhaltene Schwefeldioxid musste vielmehr in technisch aufwendiger Weise zu elementarem Schwefel verarbeitet werden. Es wird dazu auf die US-PS 4 155 990 verwiesen. Danach wird ein Teil des Schwefeldioxids katalytisch zu Schwefelwasserstoff reduziert, wozu beträchtliche Mengen Wasserstoff erforderlich sind. Der so erhaltene konzentrierte Schwefelwasserstoff wird dann mit einem Teil des Schwefeldioxids unter Bildung von elementarem Schwefel umgesetzt. Es ist sehr schwierig die Temperatur ausreichend niedrig zu halten, um das Gleichgewicht in einem günstigen Bereich zu halten, indem die Umwandlung zu elementarem Schwefel im wesentlichen vollständig ist. Aus der genannten US-Patentschrift ist es im übrigen bekannt, dass bei üblichen Eisenkatalysatoren nicht Schwefel, sondern Schwefeldioxid bei der Regenerierung mit Sauerstoff gebildet wird.

Ein wesentlicher Vorteil des Verfahrens gemäss der Erfindung liegt also darin, dass bei seiner Durchführung aufgrund der Verwendung der speziellen oben definierten Absorptionsmassen beim Regenerieren unmittelbar elementarer Schwefel erhalten und somit die nach dem Stand der Technik erforderliche umständliche Umwandlung des Schwefeldioxid in elementaren Schwefel vermieden wird.

Insbesondere bei der Verwendung von Eisen-Absorptionsmassen gemäss der Erfindung ist es zweckmässig, dass die Gase, aus denen die Schwefelverbindungen entfernt werden, reduzierende Gase sind, damit während der Absorption eine Bildung von elementarem Schwefel vermieden wird. Wenn die Gase Oxidationsmittel enthalten, erfolgt praktisch gleichzeitig eine Regenerierung unter Bildung von Schwefel. Wenn nicht Eisen als aktives Metall verwendet wird, erfolgt eine Bildung von Schwefeldioxid, oder bei Kupfer, von Schwefeltrioxid. Das Verfahren gemäss der Erfindung kann aber auch so durchgeführt werden, dass die Gase Oxidationsmittel enthalten, wobei, wie eben beschrieben, gleichzeitig eine Regenerierung erfolgt unter Bildung von Schwefel, Schwefeldioxid bzw. Schwefeltrioxid je nach Art der verwendeten Absorptionsmasse. Diese gebildeten Produkte müssen dann aus dem das Absorptionsbett verlassenden Gasstrom abgetrennt werden.

Unter den Begriff «Metalloxide», die in fein verteilter Form auf dem Träger vorliegen, werden im Sinne der vorliegenden Erfindung auch hydratisierte Oxide bzw. Hydrosilikate verstanden, die je nach der Herstellungstemperatur und dem Wasserdampfdruck entstehen können, wie dem Fachmann bekannt ist. Dies gilt besonders für Eisenoxid-Absorptionsmassen, bei denen in Abhängigkeit von der Temperatur und dem Wasserdampfdruck das Eisen als FeOOH, $Fe_3O_4$ oder $Fe_2O_3$ vorliegen kann. Die Absorptionskapazität wird durch einen insbesondere geringen Wassergehalt nicht beeinträchtigt. Die Regenerierung der Absorptions- bzw. Katalysatormassen, die gemäss der Erfindung verwendet werden, durch Überleitung von Oxidationsmittel enthaltenden Gasen erfolgt sehr schnell. Die Reaktionswärme, insbesondere bei Verwendung von Sauerstoff als Oxidationsmittel, ist jedoch beträchtlich:

$$2\,FeS + 1\tfrac{1}{2}\,O_2 \rightarrow Fe_2O_3 + 2\,S \qquad \Delta H = 151\ \text{kcal.}$$

Der Anteil des Oxidationsmittels im zum Regenerieren verwendeten Gasstrom kann dazu verwendet werden, um die Temperaturen bei der Regenerierung zu steuern und insbesondere unerwünscht hohe Temperaturen zu vermeiden. Zweckmässig wird der Anteil des Oxidationsmittels so gewählt, dass die Temperatur zwischen 200 und 700 °C, vorzugsweise zwischen 400 und 550 °C beträgt.

Die Erfindung wird anhand der folgenden Beispiele erläutert, ohne sie hierauf zu beschränken.

Herstellung der Katalysator- bzw. Absorptionsmassen.

Herstellungsbeispiel I (Methode A)

6 kg $MgCl_2$ und 1.4 kg Fe(II)$Cl_2$ wurden in 600 l entionisiertem Wasser gelöst. Getrennt hiervon wurden 5.1 kg $(NH_4)_2\,C_2O_4 \cdot H_2O$ in 300 l entionisiertem Wasser bei 50 °C gelöst. Die Ammoniumoxalatlösung wurde zur gerührten Lösung von Magnesiumchlorid und Eisenchlorid gegeben. Das erhaltene Gemisch wurde 42 Stunden bei Raumtemperatur gerührt. Der ausgefallene Feststoff wurde anschliessend abfiltriert und mit kaltem Wasser gewaschen. Das gewaschene, schwach gelbe Material wurde 48 Stunden im Vakuum bei 40 °C getrocknet. Das getrocknete Material wurde in einen rotierenden Calcinierofen gegeben und in einem Luftstrom bei 400 °C zersetzt. Nach der Zersetzung wurde das Pulver tablettiert. Das Eisen: Magnesiumoxidverhältnis betrug 1:4. Der Eisengehalt betrug 200 Gew.%.

Das Röntgen-Beugungsbild des zersetzten Materials zeigte verhältnismässig scharfe Beugungsmaxima für Magnesiumoxid und stark verbreiterte Banden für Eisen-(III)-Oxid. Eine Probe wurde mit Ultraschall in Ethanol zerkleinert, und die Untersuchung eines Tropfens dieser Dispersion auf einem Kohlenstoff-Film im Transmissions-Elektronenmikroskop ergab, dass die Teilchen etwa 10 nm Durchmesser aufweisen und homogen innerhalb des Trägers verteilt sind.

Herstellungsbeispiel II (Methode B)

Nach dem in der DE-PS 1 767 202 beschriebenen Verfahren wurden 29.1 kg Cu $(NO_3)_2 \cdot 3H_2O$ in 800 l Wasser gelöst. Dann wurden 14.7 kg fein verteiltes Siliciumdioxid (AEROSIL, eingetragenes Warenzeichen) mit einer spezifischen Oberfläche von 200 $m^2/g$ in der Lösung suspendiert. Die Temperatur der gerührten Suspension wurde auf 90 °C gebracht, und es wurden 22.2 kg Harnstoff gelöst in 50 l Wasser schnell zur Suspension gegeben. Vor der Zugabe der Harnstofflösung war der pH-Wert der Suspension durch Zugabe von Salpetersäure auf 2.1 eingestellt.

Innerhalb 30 Minuten nach Zugabe des Harnstoffs stieg der pH-Wert auf 3.85. Danach fiel er auf etwa 3.6. Anschliessend stieg er innerhalb 8 Stunden auf 3.85. In den darauffolgenden 2 Stunden stieg er auf 5.35. Während der nächsten 9 Stunden fiel er auf 5.0. Der beladene grüne Trägerstoff wurde abfiltriert und bei 120 °C getrocknet. Der Kupfergehalt entsprach einem Kupfer:Siliciumdioxid-Verhältnis von 0.52. Die Masse enthielt 34.2 Gew.% Kupfer. Vor und nach dem Kalzinieren bei 450 °C ergab die Masse kein Röntgen-Beugungsbild. Nach Reduktion in einen Wasserstoffstrom bei 350 °C und Stehenlassen an der Luft bei 20 °C ergab das Röntgen-Beugungsspektrum sehr breite Maxima von Kupferoxid. Eine andere Probe des reduzierten Materials wurde in ein polymerisierbares Monomer eingebettet, das Monomere wurde polymerisiert, und vom gehärteten Polymer wurden Ultradünnschnitte gemacht. Die Untersuchung der Ultradünnschnitte in einen Elektronenmikroskop hoher Auflösung zeigte das Vorhandensein von metallischen Kupferteilchen. Die meisten der Teilchen hatten einen Durchmesser von etwa 15 nm.

Herstellungsbeispiel III (Methode B)

Nach dem Verfahren der DE-PS 1 767 202 wurde unter Verwendung von Eisen-(II) eine Absorptionsmasse hergestellt. 11 kg Eisenpulver (ferrum reductum) wurden in 24 l entionisiertem, sauerstoff-freiem Wasser dispergiert. Dann wurden 24 l konzentrierte Salzsäure (38 Gew.% HCl) zugegeben. Nach 12 Stunden blieb nur eine geringe Menge metallisches Eisen zurück, um die Bildung von Eisen-(III) zu verhindern.

8 kg Harnstoff wurden in 800 l Wasser gelöst. 4 kg fein verteiltes Siliciumdioxid (AEROSIL, eingetragenes Warenzeichen) mit einer spezifischen

Oberfläche von 380 $m^2/g$ wurden in der Lösung suspendiert. Die Lösung wurde 30 Minuten bei 90 °C unter Stickstoffatmosphäre erhitzt, um gelösten Sauerstoff zu entfernen. Durch Zugabe von Salzsäure wurde der pH-Wert der Suspension auf 2.0 eingestellt. Dann wurde die Suspension in Stickstoffatmosphäre auf 25 °C abgekühlt, und es wurden 18 l der obigen Eisen-(II)-Chloridlösung enthaltend 4 kg Eisen zugegeben. Dann wurde die Temperatur auf 90 °C erhöht. Der pH-Wert der Suspension stieg innerhalb 30 Minuten auf 5.8. Dann fiel er auf 5.3 und blieb auf dieser Höhe 24 Stunden lang. Danach stieg er auf 7. Die Farbe des beladenen Trägers war weiss. Das Eisen-(II) war vollständig auf dem Träger niedergeschlagen.

Während der Filtration des beladenen Trägers oxidierte das Eisen-(II), was dazu führte, dass der beladene Träger eine blau-grüne Farbe annahm. Es wurde mit Wasser gewaschen und 24 Stunden bei 120 °C getrocknet. Das getrocknete Material hatte eine rötliche Farbe. Das Eisen:Siliciumdioxid-Verhältnis betrug 1:1. Der Eisengehalt betrug 50 Gew.%.

Das Röntgenbeugungsbild des getrockneten Materials zeigte nur einige breite Banden, die nicht den Maxima-Banden von Eisenoxid entsprachen. Untersuchung des mit Ultraschall dispergierten Materials auf einem Kohlenstoff-Film im Elektronenmikroskop zeigte das Vorhandensein von sehr kleinen, dünnen Plättchen. Die Dicke der gebogenen Eisen(II)-Hydrosilikat-Plättchen betrug etwa 2 nm, ihre seitliche Ausdehnung etwa 20 nm. Die spezifische Oberfläche des Siliciumdioxids hatte von 380 $m^2/g$ auf 500 $m^2/g$ zugenommen, was beweist, dass das Siliciumdioxid durch die Eisen-(II)-Ionen angegriffen worden war.

Das Eisen in der Masse kann mit einem Wasserstoffstrom bei 400 °C zu Eisen-(II) reduziert werden. Um eine Reduktion zu metallischem Eisen durchzuführen, muss auf Temperaturen über 800 °C erhitzt werden.

Herstellungsbeispiel IV (Methode C)

Die Hydroxylionen für die Fällung des hydratisierten Oxids wurden durch Hydrolyse von KCNO gemäss der folgenden Gleichung gebildet:

$$KCNO + 3H_2O \rightarrow K^+ + NH_4^+ + 2OH^- + CO_2$$

Schon bei 35 °C erfolgt diese Reaktion genügend schnell. Es muss die Bildung von Blasen im Injektionsrohr vermieden werden. Bei der genannten Temperatur tritt eine Blasenbildung jedoch nicht auf.

8 kg KCNO wurden in 600 l entionisiertem Wasser gelöst. Dann wurden 4 kg fein verteiltes Siliciumdioxid (AEROSIL, eingetragenes Warenzeichen) mit einer spezifischen Oberfläche von 300 $m^2/g$ in der Lösung suspendiert. Die Temperatur wurde auf 38 °C erhöht. Dann wurden 200 l entionisiertes Wasser, in dem 4 kg $Fe(NO_3)_3 \cdot 9H_2O$ gelöst worden waren, unter die Oberfläche der lebhaft gerührten Suspension durch zwei Injektionsrohre eingeleitet. Die Injektion dieser 200 l Lösung dauerte 26 Stunden. Der pH-Wert blieb während der Injektion im Bereich von 5.7 bis 6.2.

Der hell-braune beladene Träger setzte sich schnell ab. Er wurde von der Flüssigkeit durch Dekantierung abgetrennt, mit Wasser gewaschen und 24 Stunden bei 120 °C getrocknet. Das Eisen: Siliciumdioxid-Verhältnis betrug 1:4. Der Eisengehalt betrug 20 Gew.%.

Das Röntgenbeugungsbild des getrockneten Materials zeigte stark verbreiterte Banden an der Position für α-FeOOH. Beim Erhitzen auf 800 °C wird Wasser verloren. Da so erhitzte fein verteilte Eisen-(III)-Oxid reagierte bei Raumtemperatur mit der Luftfeuchtigkeit unter Bildung von α-FeOOH. Die Behandlung bei 800 °C hat die Röntgenbeugungsmaxima sehr verschärft.

Im Transmissions-Elektronenmikroskop erkennt man sehr kleine Eisenoxidteilchen, die sehr gleichmässig über die Oberfläche des Trägerstoffes verteilt sind. Der Durchmesser der Teilchen betrug etwa 4 nm.

Mit einem Wasserstoff-Gasstrom kann das Eisen-(III) bei 400 °C auf dem beladenen Träger zu Eisen-(II) reduziert werden. Wenn der beladene Träger 48 Stunden bei 600 °C mit einem Wasserstoff-Gasstrom behandelt wird, erhält man kein metallisches Eisen. Selbst bei 800 °C konnte keine merkliche Reduktion zu metallischem Eisen beobachtet werden.

Beispiel 1:

In einem zylindrischen Reaktor mit einem Durchmesser von 1 cm wurden bis zu einer Höhe von 2.5 cm 2 ml des gemäss Herstellungsbeispiel II erhaltenen Absorptionsmittels gefüllt. Diese Menge Absorptionsmittel enthielt 0.2 g Kupfer.

Ein Gasgemisch enthaltend 1 Vol.% $H_2S$, 10 Vol.% $H_2$, 10 Vol.% CO, Rest Stickstoff, wurde mit einer Raumgeschwindigkeit von 2,000 $h^{-1}$ über dieses Absorptionsmittel geleitet.

In Fig. 1 ist der $H_2S$-Gehalt im den Reaktor verlassenden Gas als Funktion der Zeit aufgetragen. Es wurden Versuche bei 300 °C, 400 °C und 500 °C durchgeführt. Aus Fig. 1 ist ersichtlich, dass nach etwa 30 Minuten $H_2S$ durch das Absorptionsbett gelangte, was darauf zurückzuführen war, dass eine Sättigung des Absorptionsmittels eingetreten war. Der bei den verschiedenen Temperaturen beobachtete Unterschied in der Sättigungszeit liegt im wesentlichen innerhalb der experimentellen Fehlergrenze. Die Tatsache, dass die Temperatur die Absorptionskapazität nicht beeinflusst, zeigt, dass die Reaktion von Kupfer(oxid) mit $H_2S$ nicht die Geschwindigkeit des Verfahrens bestimmt, was an sich bei den extrem kleinen Kupferoxidteilchen der Reaktionsmasse zu erwarten gewesen wäre. Im Sättigungszustand betrug das Atomverhältnis Schwefel:Kupfer etwa 0.5. Der Sättigungswert blieb wahrscheinlich deshalb unter 1.5, weil ein beträchtlicher Anteil der Kupferionen ein stabiles Kupferhydrosilicat gebildet hat. Der steile Anstieg im $H_2S$-Gehalt im Restgas zeigt den nahezu idealen Charakter der Absorptionsmassen bzw. die nahezu ideale Absorption beim Verfahren gemäss der Erfindung. Die Absorptionsmasse kann also bis zur maximalen Beladung benutzt werden, ehe in Restgas merkliche Mengen Schwefelwasserstoff auftreten. Bis zum abrupten Anstieg des $H_2S$-Gehalts nach etwa 30 Minuten liegt er im Restgas unter 0.1 ppm.

Die Absorptionsmasse wurde durch Überleiten eines Stickstoffstroms enthaltend 1 Vol.% Sauerstoff bei 300 bis 500 °C regeneriert. Es wurden nur Schwefel und Schwefeltrioxid, jedoch kein Schwefeldioxid erhalten. Eine Regeneriertemperatur von etwa 500 °C ist bevorzugt, da die Bildung von Schwefel und Schwefeltrioxid aus der beladenen Absorptionsmasse dann schneller erfolgt. Die Absorption und Regenerierung konnte mehr als 1000 mal wiederholt werden, ohne dass die Absorptionskapazität wesentlich vermindert worden wäre. Bei dem verwendeten Sauerstoffgehalt dauerte die Regenerierung etwa 25 Minuten. Es wurde kein merklicher Temperaturanstieg bei der Regenerierung beobachtet. Wenn die Regenerierung einem Gasstrom enthaltend einen höheren Sauerstoffgehalt, z. B. 20 Vol.%, durchgeführt wurde, konnte mittels eines Thermoelements in der Absorptionsmasse eine Temperaturerhöhung von 80 °C festgestellt werden.

Diese Werte wurden im oben beschriebenen Laborreaktor erhalten, der mit einer Heiz- und Kühleinrichtung versehen war. Im technischen Betrieb sind stärkere Temperaturanstiege bei hohen Sauerstoffgehalten zu erwarten.

Beispiel 2:

Zur Herstellung einer Vanadiumoxid/Aluminiumoxid-Absorptionsmasse wurde Salpetersäure in eine Suspension von fein verteiltem Aluminiumoxid (spezifische Oberfläche 176 $m^2/g$) in einer Lösung von Ammoniummetavanadat injektiert. Der pH-Wert sank allmählich auf 2.5. Bei diesem pH-Wert war das Vanadat vollständig auf dem Aluminiumoxid niedergeschlagen. Im Röntgenbeugungsbild konnten $V_2O_5$ oder andere Vanadiumverbindungen nicht ermittelt werden. Unter dem Elektronenmikroskop konnten auch keine Vanadiumoxid-Teilchen unterschieden werden. Der beladene Träger enthielt 6 Gew.% Vanadium.

Der im Beispiel 1 verwendete Reaktor wurde mit 2 ml der Absorptionsmasse gefüllt. Eine Gasmischung enthaltend 1 Vol.% $H_2S$, 10 Vol.% $H_2$, 10 Vol.% CO, Rest Stickstoff, wurde über das Absorptionsmittel mit einer Raumgeschwindigkeit von 2000 $h^{-1}$ geleitet. Das Absorptionsbett enthielt 0.164 g Vanadium. Fig. 2 zeigt die $H_2S$-Konzentration im Restgas als Funktion der Zeit. Das Atomverhältnis Schwefel:Vanadium beim Durchbruch betrug 0.11. Auch in diesem Fall hing die Absorptionskapazität nicht von der Absorptionstemperatur ab. Bis zum Durchbruch lag der $H_2S$-Gehalt in Restgas unter 0.1 ppm.

Die Regenerierung wurde wie im Beispiel 1 durch Durchleitung eines 1 Vol.% Sauerstoff enthaltenden Stickstoffstroms durchgeführt. Das erhaltene Gas enthielt Schwefeldämpfe und eine geringe Menge Schwefeldioxid. Die Regenerierung kann bei 300 bis 500 °C durchgeführt werden. Bei 500 °C ist die Entwicklung von Schwefeldämpfen am schnellsten.

Bei dem genannten Sauerstoffgehalt benötigte die Regenerierung 7 Minuten. Die Regenerierungszeit ist im Temperaturbereich von 300 bis 500 °C von der Temperatur im wesentlichen unabhängig.

Beispiel 3:

Es wurde die im Herstellungsbeispiel IV beschriebene Absorptionsmasse verwendet. Die Versuchsdurchführung erfolgt wie in Beispiel 1 unter Verwendung von 2 ml der Absorptionsmasse.

In Fig. 3 ist die Restkonzentration an $H_2S$ als Funktion der Zeit aufgetragen. Nach 30 bis 40 Minuten steigt die $H_2S$-Konzentration abrupt an. Die unterschiedlichen Werte bei verschiedenen Temperaturen (300 bis 500 °C) sind wiederum im wesentlichen auf experimentelle Fehlergrenzen zurückzuführen. Beim Durchbruch betrug das Schwefel:Eisenverhältnis 0.35. Der Grund für dieses niedrige Verhältnis liegt in einer merklichen Reaktion unter Bildung von Eisen-(II)-Hydrosilicat. Vor dem starken Anstieg der $H_2S$-Konzentration (Durchbruch) lag der Gehalt an $H_2S$ unter 0.1 ppm. Um die Stabilität der Absorptionsmasse zu demonstrieren, ist in Fig. 4 die $H_2S$-Konzentration als Funktion der Zeit bei 400 °C nach 2, 3 und 26 Durchläufen aufgetragen.

Es tritt kein merklicher Aktivitätsverlust auf. Selbst nach 1000 Regenerierungen tritt praktisch keine Änderung auf.

Die Regenerierung wurde wie in den vorhergehenden Beispielen mit 1 Vol.% Sauerstoff bei 300 bis 500 °C durchgeführt. Es wurde nur elementarer Schwefel erhalten. Am schnellsten erfolgt dies bei 500 °C.

Die Regenerierzeit ist bei 300 bis 500 °C im wesentlichen temperaturunabhängig. Die Regenerierzeit wird im wesentlichen durch den Sauerstoffgehalt im Gassstrom während des Regenerierens bestimmt und betrug bei diesem Beispiel 35 Minuten.

Beispiel 4:

Es wurde wie in Beispiel 3 beschrieben gearbeitet. Jedoch wurde in alternativer Weise das Regenerieren des Absorptionsmittels bei 250 °C durchgeführt. Bei dieser Temperatur wurde Stickstoff, der 2 Vol.% Sauerstoff enthielt, durch die Absorptionsmasse geleitet. Nach 35 Minuten wurde die Sauerstoffzufuhr abgestellt, und der Reaktor wurde auf 400 °C erhitzt. Dabei verflüchtigte sich der in der Absorptionsmasse enthaltene elementare Schwefel und schied sich an den kalten Teilen des Reaktors ab.

In einem anderen Versuch wurde das Regenerieren bei Raumtemperatur mit Luft durchgeführt. Innerhalb 6 Stunden wurde das Eisen der Absorptionsmasse vollständig in $Fe_3O_4$ übergeführt. Der Schwefel lag als elementarer Schwefel vor und konnte durch Erhitzen der Absorptionsmasse in einem Stickstoffstrom auf etwa 400 °C entfernt werden.

Vergleichsversuch

Es wurde massives Eisenoxid als Absorptionsmasse verwendet, hergestellt nach Methode C, jedoch ohne Verwendung eines suspendierten Trägerstoffes. Das Röntgenbeugungsbild des getrockneten Materials zeigte verbreiterte Maxima von α-FeOOH. Im Raster-Elektronenmikroskop erschien das Material als sphärische Konglomerate von etwa 0.5 µm. Die Teilchen, die das Konglomerat bildeten, hatten aufgrund der Verbreiterung der Röntgen-Beugungsmaxima schätzungsweise eine Grösse von etwa 50 nm.

Die Versuchsdurchführung erfolgte wie in den vorhergehenden Beispielen. Die verwendete Absorptionsmasse enthielt 0.315 g Eisen.

Nach dem ersten Versuch wurde ein Anstieg in der $H_2S$-Konzentration im Restgas bereits nach 10 Minuten beobachtet, jedoch erfolgte während mehr als 140 Minuten eine wesentliche Aufnahme an $H_2S$. Selbst nach 300 Minuten konnte noch eine merkliche $H_2S$-Aufnahme beobachtet werden. Nach dem Regenerieren ähnelte das Verhalten dieser Absorptionsmasse derjenigen einer Masse mit trägergebundenem Eisenoxid, wie aus Fig. 5 ersichtlich ist. Die Zeit bis zum steilen Konzentrationsanstieg nimmt mit der Zahl der Regenerierungszyklen ab. Ausserdem ist der Anstieg der $H_2$-Konzentration weniger Steil nach 3 und mehr Regenerierungen. Nach 11 Regenerierungen war die Zeit auf 30 Minuten gesunken.

Die Absorptionsmasse schrumpfte erheblich beim Beladen und Regenerieren. Nach 11 Regenerierungen betrug das Volumen nur noch 1.7 ml durch Sintern und Desintegration der Teilchen. Der Gasstrom hat Teilchen der Absorptionsmasse weggetragen. Ausserdem sind die Teilchen der Absorptionsmasse nach etwa 10 Regenerierungen sehr brüchig geworden. Das Regenerieren wurde wie in den vorhergehenden Beispielen bei Temperaturen von 300 bis 500 °C durchgeführt. In diesem Bereich entwich im wesentlichen Schwefeldioxid. Der Anteil an Schwefel war gering. Das Regenerieren erfolgte sehr viel langsamer als gemäss den Beispielen. Während das Beladen etwa 30 Minuten dauerte, wurden für das Regenerieren etwa 3 Stunden bei 500 °C benötigt. Bei niedrigeren Temperaturen dauerte das Regenerieren noch länger.

Beispiel 5:

Es wurde die gemäss Herstellungsbeispiel III erhaltene Absorptionsmasse verwendet. Die Versuchsdurchführung war wie im Beispiel 1 unter Verwendung von 2 ml Absorptionsmasse. Das Beladen erfolgte bei 400 °C. Die $H_2S$-Konzentration lag 63 Minuten lang unter 0.1 ppm im Restgas. Dann stieg sie steil auf 1 Vol.%. In diesem Zeitpunkt betrug das Schwefel:Eisenverhältnis 0.44.

Bei 500 °C wurde mit einem Stickstoffstrom enthaltend 1 Vol.% Sauerstoff regeneriert. Es entwich nur elementarer Schwefel als Dampf. Das Regenerieren dauerte 60 Minuten. Eine merkliche Änderung in der Absorptionskapazität trat nach vielen Beladungs- und Regenerierungszyklen nicht auf.

Beispiel 6:

Als Absorptionsmasse wurde ein gemäss Methode B hergestelltes Eisenoxid auf Titandioxid als Träger verwendet. Der Trägerstoff war fein verteiltes Titandioxid mit einer spezifischen Oberfläche von 50 m²/g (P 25 der Firma Degussa, Bundesrepublik Deutschland). Die Ausfällung erfolgte durch Hydrolyse von Harnstoff in Stickstoffatmosphäre. Die Katalysatormasse enthält 20 Gew.% Eisen.

Die Versuchsdurchführung war wie im Beispiel 1 beschrieben. 2 ml Absorptionsmasse wurden verwendet. Die Raumgeschwindigkeit betrug 2000 $h^{-1}$. Die verwendete Menge Absorptionsmasse enthielt 0.16 g Eisen.

In Fig. 6 ist die $H_2S$-Konzentration im Restgas als Funktion der Zeit aufgetragen. Vor dem steilen Anstieg des $H_2S$-Gehalts lag er unter 0.1 ppm. Aus Fig. 6 ist ersichtlich, dass bei 300 °C die Konzentration nach wesentlich kürzerer Zeit abrupt anstieg als bei 400 °C und 500 °C.

Bei 300 °C betrug das Schwefel:Eisen-Atomverhältnis beim Durchbruch 0.25, und bei 400 °C bis 500 °C 0.68. Wenn die $H_2S$-Konzentration im Restgas den Wert von 1 Vol.% erreicht hat (dies ist der Gehalt des zugeführten Gases) betrug das Verhältnis bei 500 °C 0.98 und bei 400 °C 0.85.

Fig. 7 zeigt die Stabilität der Absorptionsmasse: Die für 400 °C gemessenen Kurven zeigen für die frische Absorptionsmasse und die 12 mal regenerierte Absorptionsmasse praktisch keinen Unterschied.

Es wurde wie in den vorhergehenden Beispielen beschrieben mit einem 1 Vol.% Sauerstoff enthaltenden Stickstoffstrom regeneriert. Als Reaktionsprodukt wurde nur elementarer Schwefel in Dampfform erhalten. Die Schwefelbildung war bei 500 °C schneller als bei 300 °C.

Beispiel 7:

Als Absorptionsmasse wurde nach Methode B auf fein verteiltem Aluminiumoxid niedergeschlagenes Eisenoxid verwendet. Das Aluminiumoxid hatte eine spezifische Oberfläche von 176 m²/g (P 1401 der Firma HARSHAW, Niederlande). Der Niederschlag wurde durch Hydrolyse von Harnstoff in Stickstoffatmosphäre unter Verwendung von Eisen-(II) Salz erzeugt. Der Eisengehalt betrug 20 Gew.%. Die Versuchsdurchführung war wie in Beispiel 1 unter Verwendung von 2 ml Absorptionsmasse. In Fig. 8 ist die $H_2S$-Konzentration im Restgas als Funktion der Zeit aufgetragen. Vor dem steilen Anstieg lag die $H_2S$-Konzentration unter 0.1 ppm. Aus Fig. 8 ist ersichtlich, dass die Absorptionskapazität mit der Temperatur steigt. Bei 300 °C erfolgte der abrupte Anstieg in der $H_2S$-Konzentration bei einem Schwefel:Eisen-Verhältnis von 0.29; bei 400 °C bei 0.31 und bei 500 °C bei 0.7.

Es wurde wie in den vorhergehenden Beispielen beschrieben bei 500 °C regeneriert. Die vollständige Regeneration benötigte 100 Minuten. Der das Absorptionsmittel verlassende Gasstrom enthielt neben elementarem Schwefel etwa 0.1 Vol.% Schwefeldioxid.

Fig. 9 zeigt den Effekt des Beladens und Regenerierens. Bis zu 8 Regenerier-Zyklen steigt die Kapazität. Dann bleibt sie praktisch konstant.

Beispiel 8:

Es wurde die gemäss Herstellungsbeispiel I erhaltene Absorptionsmasse verwendet. Die Versuchsdurchführung wae wie in Beispiel 1 unter Verwendung von 2 ml Absorptionsmasse. In Fig. 10 ist die $H_2S$-Konzentration im Restgas als Funktion der Zeit aufgetragen. Beim abrupten Anstieg der $H_2S$-Konzentration betrug das Eisen: Schwefelverhältnis 0.06 bei 300 °C, 0.25 bei 400 °C und 0.29 bei 500 °C. Die Absorptionskapazität änderte sich nach zahlreichen Beladungs-Regenerierungszyklen praktisch nicht, wie aus Fig. 11 ersichtlich ist. Es wurde bei 500 °C mit einem 1 Vol.% Sauerstoff enthaltenden Stickstoffstrom regeneriert. Als Reaktionsprodukt wurde ausschliesslich elementarer Schwefeldampf erhalten. Die vollständige Regenerierung dauerte 90 Minuten. Bei 400 °C wurden 2 Stunden zum vollständigen Regenerieren benötigt.

Beispiel 9:

Dieses Beispiel betrifft die Abhängigkeit der $H_2S$-Absorption vom Wasserstoff- und Kohlenmonoxid-Gehalt des Gasstromes. Eine Absorptionsmasse von Eisen auf Aerosil (eingetragenes Warenzeichen) (50 Gew.% Eisen) wurde nach dem Verfahren C hergestellt.

Bei Verwendung von 2 ml dieser Absorptionsmasse waren der Gasfluss während des Beladens des Absorptionsmittels und die Raumgeschwindigkeit wie in den vorhergehenden Beispielen.

Selbst dann, wenn das Trägergas Wasserstoff mit einem Gehalt von 1 Vol.% $H_2S$ war, betrug das Schwefel:Eisen-Verhältnis 0.6.

Es wurde auch der Kohlenmonoxid-Gehalt des Gases geändert. Bei Abwesenheit von Kohlenmonoxid betrug das Schwefel:Eisen-Verhältnis 0.8. Bei mehr als 1 Vol.% CO fiel das Schwefel:Eisen-Verhältnis auf 0.6. Die Kapazität blieb selbst bei einem CO-Gehalt von mehr als 50 Vol.% konstant.

Beispiel 10:

Die Entschwefelung wird in einer Anlage durchgeführt, wie sie schematisch in der Figur 12 dargestellt ist. Diese enthält zwei Absorptionsreaktoren 1 und 2. Sie werden mit der Absorptionsmasse gefüllt. Das Katalysatorvolumen beträgt in diesem Beispiel 20 $m^3$, wobei das freie Gasvolumen 60% der Absorptionsmasse ausmacht. Es wird ein Eisenoxid-Katalysator auf Aluminiumoxid mit einem Gewichtsverhältnis 0.7, gerechnet als metallisches Eisen im Verhältnis zum Aluminiumoxid als Träger. Durch einen solchen Reaktor können $10^4$ $m^3_0$/Stunde eines reduzierenden Gasstromes enthaltend etwa 2 Vol.% $H_2S$ geleitet werden.

Der Absorptionsreaktor 1 wird zunächst mit Stickstoff aus 5 gespült und dann mit Dampf vorgeheizt, der bei 3 zugeführt wird. Das $H_2S$-haltige Rohgas wird bei 6 zugeführt. Es hat in der Regel eine Temperatur von etwa 150 °C aufgrund der Vorbehandlung. Im Aufheizer 7 wird es auf eine Temperatur von etwa 300 °C oder darüber aufgeheizt. Dann wird es in den Reaktor 1 geleitet, wobei die Ventile entsprechend geschaltet werden. Das den Reaktor 1 verlassende Gas gelangt über eine Leitung 8 in den Sicherheitsreaktor 9. Darin werden eventuell noch vorhandene Restmengen $H_2S$ entfernt, bis der $H_2S$-Gehalt am Ende des Reaktors 9 unter 0.1 ppm liegt. Falls nötig, wird der dem Reaktor 9 zugeführte Gasstrom in der Heiz/Kühlvorrichtung 10 auf eine geeignete Temperatur gebracht. An die Leitung 8 ist eine $H_2S$-Messvorrichtung 11 angeschlossen. Sie dient in erster Linie dazu festzustellen, wann die Absorptionsmasse in dem jeweils arbeitenden Absorptionsreaktor 1 oder 2 beladen ist. In diesem Fall steigt der $H_2S$-Gehalt steil an. Es muss dann auf den jeweils anderen Reaktor umgeschaltet werden. Dies kann über automatisch arbeitende Steuerungsanlagen erfolgen. In Abhängigkeit von der Beladung des Rohgases mit Schwefelwasserstoff, der Temperatur und der Raumgeschwindigkeit dauert es in jedem Fall einige Stunden, bis die Absorptionsmasse eines Absorptionsreaktors mit Schwefel so stark beladen ist, dass die Regenerierung durchgeführt werden muss.

Nachdem der Reaktor 1 mit Schwefel beladen wurde, wird der Gasstrom 6 in den Reaktor 2 geleitet. Die im Reaktor 1 enthaltene Absorptionsmasse wird nun dadurch regeneriert, dass ein Gemisch aus Dampf, zugeführt bei 3, und Luft, zugeführt bei 4, durch den Reaktor 1 geleitet wird. Das Dampf/Luftverhältnis liegt in der Grössenordnung von 3 bis 12 und wird so eingestellt, dass die Temperatur der Absorptionsmasse nicht über 700 °C bis 800 °C steigt. Während die Absorption in der Regel bei einem Druck von 0,5 bis 15 mPa durchgeführt wird, kann die Regenerierung bei niedrigeren Drucken bs herab zu Atmosphärendruck durchgeführt werden. Dies kann technisch dazu genutzt werden, die Luft aus der Zuführung 4 mittels eines Ejektors 12 durch den Dampfstrom anzusaugen. Der Druck muss natürlich so gross gewählt werden, dass eine genügend schnelle Durchströmung des Reaktors beibehalten wird. Das den Reaktor 1 während des Regeneriervorganges verlassende Gasgemisch wird über die Leitung 13 und den Kühler 14, in dem das Gasgemisch auf etwa 150 bis 200 °C abgekühlt wird, um den beim Regenerieren gebildeten Schwefel zu verflüssigen, in das geschlossene Gefäss 15 geleitet, in dem der Schwefel vom Gasgemisch abgetrennt wird. Der flüssige Schwefel wird über das Ventil 16 abgezogen. Das Gasgemisch wird über die Leitung 17 abgeführt und kann je nach der Zusammensetzung und der Gesamtkonzeption der Anlage darin verwendet oder einer Verbrennungsvorrichtung zugeführt werden, um eventuelle Restmengen brennbarer Stoffe und Schwefel zu verbrennen. Der Schwefelgehalt des Abgases 17 ist äusserst gering.

Wenn der Sicherheitsreaktor 9 mit Schwefel beladen ist, muss er ebenfalls regeneriert werden oder, falls hier eine nicht-regenerierbare Absorptionsmasse verwendet wird, mit frischer Absorptionsmasse gefüllt werden. Wenn eine regenerierbare Absorptionsmasse, wie in den Reaktoren 1 und 2, verwendet wird, wird während des Regenerierungsvorganges das den Reaktor 9 verlassende Gasgemisch über die Leitung 18 durch entsprechend geschaltete Ventile dem Kühler 14 und dem Abscheidegefäss 15 zugeführt. Das zum Regenerieren verwendete Gemisch aus Dampf und Luft wird über die Leitung 19 dem Sicherheitsreaktor 9 zugeführt.

Beispiel 11:

In einen zylindrischen Reaktor mit einem Durchmesser von 1 cm wurden 8 ml der gemäss Herstellungsbeispiel IV erhaltenen Absorptionsmasse gefüllt entsprechend 2.09 g. Diese Masse enthielt 1.045 g Eisenoxid. Durch diesen Reaktor wurde ein Gasgemisch aus 79.8 Vol.% Schwefelwasserstoff und 20.2 Vol.% Stickstoff geleitet mit einer Raumgeschwindigkeit von 53.6 $h^{-1}$. Während der Absorption wurde die Masse auf 100 °C gehalten. Der Schwefelwasserstoffgehalt im Abgas lag unter 0.1 ppm. Nach 49 Minuten stieg er steil auf 79.8 Vol.%. In diesem Zeitpunkt betrug das Schwefel:Eisenverhältnis 0.59.

Die Absorptionsmasse wurde durch Überleiten eines Stickstoffstroms enthaltend 5 Vol.% Sauerstoff regeneriert. Es wurde kein Schwefeldioxid, sondern nur Schwefel gebildet. Dieser wurde in einem Kühlgefäss kondensiert. Die Absorptionskapazität fiel etwa um den Faktor 6. Nachdem die Absorptionsmasse auf 300 °C in einem Stickstoffstrom wieder erhitzt worden war, wurde die ursprüngliche Absorptionskapazität wieder erreicht.

Es konnte eine grosse Zahl von Absorptions-Regenerierzyklen durchgeführt werden, ohne dass die Kapazität merklich sank.

Beispiel 12:

Es wurde wie im Beispiel 11 gearbeitet, wobei während der Absorption die Absorptionsmasse bei 400 °C gehalten wurde. Der Schwefelwasserstoffgehalt im Abgas lag unter 0.1 ppm. Nach 51 Minuten stieg er abrupt auf 79.8 Vol.%. Das Eisen: Schwefelverhältnis betrug dann 0.62. Während dieser Reaktion entwich eine geringe Menge elementarer Schwefel aus der Absorptionsmasse.

Die Regenerierung wurde bei Temperaturen von 100 °C, 200 °C bzw. 500 °C durchgeführt, wobei die Sauerstoffgehalte 5 Vol.%, 1 Vol.% bzw. 0.5 Vol.% betrugen. Bei 100 °C und 5 Vol.% Sauerstoff wurde kein Schwefeldioxid im Abgas gefunden. Bei 200 °C musste der Sauerstoffgehalt unter 1 Vol.% liegen, um die Bildung von Schwefeldioxid im Abgas zu vermeiden. Bei 500 °C musste der Sauerstoffgehalt unter 0.5 Vol.% liegen, um die Bildung von Schwefeldioxid zu vermeiden.

Nach Regenerierung bei 200 °C und 500 °C war keine Stickstoffbehandlung bei höheren Temperaturen erforderlich, um die Absorptionskapazität durch Entfernung von noch an der Absorptionsmasse haftenden elementaren Schwefel wieder herzustellen. Die Absorptionskapazität stieg sogar mit Zunahme der Anzahl der Absorptions-Regenerier-Zyklen an.

Beispiel 13:

Die gleichzeitige Entfernung von Schwefelwasserstoff und Gewinnung von Schwefel wird in einer Anlage durchgeführt, wie sie in Figur 13 schematisch dargestellt wird. In wesentlichen Teilen entspricht sie der Anlage gemäss Figur 12. Gleiche Teile sind in Figur 13 mit den gleichen Bezugszahlen wie in Figur 12 bezeichnet.

Ein Gasgemisch aus etwa 40 Vol.% $H_2S$ und etwa 60 Vol.% $CO_2$, das von einer Gasreinigungsanlage vom Typ der physikalischen Absorption stammt, wird aus 6 in den Reaktor 1 geleitet. Die Raumgeschwindigkeit beträgt 100 $m^3_0$/Stunde. Reaktorgrösse und Beschickung mit Absorptionsmasse sind wie in Beispiel 10. Ein Vorheizen des zu behandelnden Gases braucht nicht oder nur in geringem Umfang zu erfolgen, da die Wärmeentwicklung durch die Absorptionsreaktion in diesem Fall grösser ist als in Beispiel 10. Der Temperaturanstieg in der Absorptionsstufe ist so gross, dass das den Reaktor 1 verlassende Gas eine Temperatur über 600 °C erreichen kann. Dabei wird zumindest ein Teil des Schwefels, der gleichzeitig mit der Absorptionsreaktion durch die Oxidation nach der folgenden Gleichung gebildet wird, $Fe_2O_3 + H_2S \rightarrow 2FeS + 3H_2O + S$, verdampft. Er wird im Gefäss 15 kondensiert, nachdem das Gasgemisch im Kühler 14 auf 150 bis 180 °C abgekühlt wurde. Das das Gefäss 15 verlassende Gas wird dann in den Sicherheitsreaktor 9 geleitet, gegebenenfalls nach Aufheizen im Aufheizer 10. Der den Reaktor 1 verlassende Gasstrom enthält nur geringe Mengen $H_2S$, die durch die Messvorrichtung 11 überwacht werden. Nach mehreren Stunden ist die Absorptionsmasse im Reaktor 1 mit Schwefel beladen, und zwar hauptsächlich in der Form FeS. Der bei 11 gemessene $H_2S$-Gehalt steigt dann abrupt an. Der Gasstrom 6 wird dann durch automatisch arbeitende Anlagen in den Reaktor 2 umgeleitet. Wenn der Reaktor 2 die Absorptionsfunktion übernimmt, wird der Reaktor 1 durch Verwendung eines sauerstoffhaltigen Gases, das aus 4 zugeleitet wird, zusammen mit Dampf aus 3 und/oder Stickstoff aus 5, wie im Beispiel 10, regeneriert. Der den Reaktor 1 verlassende Gasstrom wird mit dem den Reaktor 2 verlassenden Gasstrom vermischt, so dass in 15 der Schwefel gewonnen werden kann. Bei 16 kann flüssiger Schwefel abgezogen werden. Der die Reaktoren 1 und 2 verlassende Gasstrom wird durch Spezialventile geleitet, die einen Rückstrom verhindern. Die Austrittsdrucke beider Reaktoren sollten soweit als möglich gleich sein. Das den Sicherheitsreaktor 9 verlassende Gas ist im wesentlichen schwefelfrei und kann in die Atmosphäre abgelassen oder, falls erwünscht, einer Verbrennungsvorrichtung zugeleitet oder anderweitig verwendet werden.

Die Regeneration der im Sicherheitsreaktor 9 enthaltenen Absorptionsmasse kann wie im Beispiel 10 durchgeführt werden.

Beispiel 14:

In diesem Beispiel wurde eine Absorptionsmasse aus Eisen und Aerosil ($SiO_2$) (eingetragenes Warenzeichen) verwendet. Die Absorptionsmasse

war nach der Fällungsmethode B hergestellt. Dabei wurde als Lieferant für die Hydroxylgruppen Kaliumcyanat verwendet (vergleiche Herstellungsbeispiel IV). Die Fällungstemperatur betrug 45 °C.

Bei Verwendung von 2 ml dieser Absorptionsmasse waren der Gasfluss beim Beladen des Absorptionsmittels und die Raumgeschwindigkeit wie in den vorhergehenden Beispielen.

Das Eintrittsgas enthielt 25 Vol.% Wasserstoff, 10 Vol.% Kohlenmonoxid und 1 Vol.% Schwefelwasserstoff, Rest Stickstoff.

Die Absorptionsmasse wurde bei 300, 350, 400, 450 und 500 °C untersucht.

Die Gesamtmenge an aufgenommenem Schwefel bis zum Durchbruch war bei jeder Temperatur innerhalb der üblichen experimentellen Fehlergrenzen die gleiche. Das Schwefel:Eisen-Verhältnis beim Durchbruch betrug 0.9. Das Regenerieren wurde wie im Beispiel 3 beschrieben durchgeführt. Bei sorgfältiger Durchführung des Regenerierens wurde nur elementarer Schwefel erhalten.

Beispiel 15:

Dieses Beispiel erläutert die Aktivität der Schwefelentfernung bei Raumtemperatur unter Verwendung einer $Fe_2O_3/SiO_2$-Masse.

1.15 g $Fe_2O_3/SiO_2$-Katalysator, hergestellt gemäss Herstellungsbeispiel III, enthaltend 0.52 g $Fe_2O_2$, wurde in einen kleinen Testreaktor gegeben. Bei Raumtemperatur wurde ein Gemisch aus 0.78 Vol.% $H_2S$ und Rest Stickstoff durch das Katalysatorbett geleitet. Der Gehalt an $H_2S$ in dem Reaktor verlassenden Gas wurde in Abständen ermittelt.

Nach 94 Minuten lag die $H_2S$-Menge im gereinigten Gas unter 10 ppm (die genaue Menge im Bereich von 0 bis 10 ppm wurde bei diesem Versuch nicht bestimmt). Nach 94 Minuten begann der Durchbruch. Die Gesamtmenge an absorbiertem $H_2S$ war äquivalent einem Schwefel:Eisen-Verhältnis (Atomverhältnis) 0.47. Beim $H_2S$-Durchbruch betrug das Schwefel:Eisen-Verhältnis 0.2.

**Patentansprüche**

1. Verfahren zum Entfernen von Schwefelverbindungen, insbesondere Schwefelwasserstoff, aus Gasen durch Leiten der Gase über eine Absorptionsmasse enthaltend inerte, feuerfeste Materialien und Metalloxide, die mit den Schwefelverbindungen unter Bildung von Metall-Schwefelverbindungen reagieren, und Regenerieren der Absorptionsmasse durch Oxidation der Metall-Schwefelverbindungen, dadurch gekennzeichnet, dass

a) sich die Metalloxide auf einem inerten, feuerfesten Träger befinden, der eine spezifische Oberfläche von mehr als 10 m² pro g besitzt,

b) der Träger mit dem Metalloxid in einer Menge von mindestens 5 Gew.%, gerechnet als Metall der aktiven Komponente und bezogen auf das Gewicht des Trägers, beladen ist,

c) mindestens 20 Gew.% der auf dem Träger befindlichen Metalloxide in fein verteilter Form mit einer Teilchengrösse von weniger als 40 nm vorliegen,

d) und man die Gase über die Metalloxid-beladenen Träger bei einer Temperatur von 5 bis 800 °C leitet

e) und man den mit Metall-Schwefelverbindungen beladenen Träger durch Überleiten von Oxidationsmittel enthaltenden Gasen regeneriert.

2. Verfahren nach Anspruch 1, dadurch gekennzeichnet, dass die Gase, aus denen Schwefelverbindungen entfernt werden sollen, reduzierende Gase sind.

3. Verfahren nach Anspruch 2, dadurch gekennzeichnet, dass die reduzierenden Gase Kohlengas ist.

4. Verfahren nach Anspruch 3, dadurch gekennzeichnet, dass das Kohlengas als Trockengas folgende Komponenten enthält:

25 –50% $H_2$
18 –70% CO
2 –30% $CO_2$
0 –15% $CH_4$
0.01– 5% $H_2S$
< – 2% COS, $CS_2$, HCl, $NH_3$ etc.

5. Verfahren nach Anspruch 1, dadurch gekennzeichnet, dass die Gase, aus denen Schwefelverbindungen entfernt werden sollen, Erdgase sind.

6. Verfahren nach einem oder mehreren der Ansprüche 1 bis 5, dadurch gekennzeichnet, dass der Träger mit dem Metalloxid in einer Menge von mindestens 20 Gew.%, vorzugsweise mindestens 40 Gew.%, gerechnet als Metall der aktiven Komponente und bezogen auf das Gewicht des Trägers, beladen ist.

7. Verfahren nach einem oder mehreren der Ansprüche 1 bis 6, dadurch gekennzeichnet, dass man die Absorption der Schwefelverbindungen bei Temperaturen von 200 bis 800 °C, vorzugsweise 300 bis 600 °C durchführt.

8. Verfahren nach einem oder mehreren der Ansprüche 1 bis 7, dadurch gekennzeichnet, dass das Metalloxid Eisenoxid ist.

9. Verfahren nach einem oder mehreren der Ansprüche 1 bis 8, dadurch gekennzeichnet, dass mindestens 50 Gew.% der auf dem Träger befindlichen Metalloxide mit einer Teilchengrösse von weniger als 40 nm, vorzugsweise weniger als 20 nm vorliegen.

10. Verfahren nach einem oder mehreren der Ansprüche 1 bis 9, dadurch gekennzeichnet, dass man bei Temperaturen von 20 bis 700 °C regeneriert und gegebenenfalls den Schwefel bei Temperaturen über etwa 200 °C abtreibt.

11. Verfahren nach einem oder mehreren der Ansprüche 1 bis 10, dadurch gekennzeichnet, dass man bei Temperaturen von 200 bis 700 °C regeneriert.

12. Verfahren nach einem oder mehreren der Ansprüche 1 bis 11, dadurch gekennzeichnet, dass das zum Regenerieren verwendete Gas weniger als 5 Vol.% Sauerstoff enthält.

13. Verfahren nach einem oder mehreren der Ansprüche 1 bis 12, dadurch gekennzeichnet, dass die die Schwefelverbindungen enthaltenden Gase Sauerstoff in einer solchen Menge enthalten, dass das Atomverhältnis von Sauerstoff zu Schwefel nicht grösser als 1 ist.

**Claims**

1. A process for removing sulfur compounds, particularly hydrogen sulfide, from gases by passing the gases over an absorption mass containing inert, refractory materials and metal oxides which react with the sulfur compounds to form metal-sulfur compounds and regenerating the absorption mass by oxidation of the metal-sulfur compounds, characterized in that

a) the metal oxides are applied to an inert, refractory support which has a specific surface of more than 10 $m^2$ per g,

b) the support is charged with the metal oxide in a quantity of at least 5% by weight, expressed as metal of the active component and based on the weight of the support,

c) at least 20% by weight of the metal oxides on the support are present in finely divided form with a particle size of less than 40 nm,

d) and the gases are passed over the support charged with the metal oxides at a temperature of from 5 to 800 °C

e) and the support charged with metal-sulfur compounds is regenerated by passing over gases containing oxidizing agents.

2. A process as claimed in Claim 1, characterized in that the gases from which sulfur compounds are to be removed are reducing gases.

3. A process as claimed in Claim 2, characterized in that the reducing gas is coal gas.

4. A process as claimed in Claim 3, characterized in that the coal gas as dry gas contains the following components:

25 –50% $H_2$
18 –70% CO
2 –30% $CO_2$
0 –15% $CH_4$
0.01– 5% $H_2S$
< – 2% COS, $CS_2$, HCl, $NH_3$ etc.

5. A process as claimed in Claim 1, characterized in that the gases from which sulfur compounds are to be removed are natural gases.

6. A process as claimed in one or more of Claims 1 to 5, characterized in that the support is charged with the metal oxide in a quantity of at least 20% by weight and preferably in a quantity of at least 40% by weight, expressed as metal of the active component and based on the weight of the support.

7. A process as claimed in one or more of Claims 1 to 6, characterized in that the absorption of the sulfur compounds is carried out at temperatures of from 200 to 800 °C and preferably at temperatures of from 300 to 600 °C.

8. A process as claimed in one or more of Claims 1 to 7, characterized in that the metal oxide is iron oxide.

9. A process as claimed in one or more of Claims 1 to 8, characterized in that at least 50% by weight of the metal oxides on the support have a particle size of less than 40 nm and preferably of less than 20 nm.

10. A process as claimed in one or more of Claims 1 to 9, characterized in that regeneration is carried out at temperatures of from 20 to 700 °C and the sulfur is optionally driven off at temperatures above about 200 °C.

11. A process as claimed in one or more of Claims 1 to 10, characterized in that regeneration is carried out at temperatures of from 200 to 700 °C.

12. A process als claimed in one or more of Claims 1 to 11, characterized in that the gas used for regeneration contains less than 5% by volume oxygen.

13. A process as claimed in one or more auf Claims 1 to 12, characterized in that the gases containing the sulfur compounds contain oxygen in such a quantity that the atomic ratio of oxygen to sulfur is no greater than 1.

**Revendications**

1. Procédé pour éliminer des composés de soufre, en particulier l'hydrogène sulfuré, contenus dans des gaz consistant à faire passer les gaz sur une masse absorbante contenant des matériaux inertes réfractaires et des oxydes métalliques qui réagissent avec les composés du soufre en donnant des composés métalliques du soufre, et à régénérer la masse absorbante par oxydation des composés métalliques du soufre caractérisé:

a) par le fait que les oxydes métalliques se trouvent sur un support inerte réfractaire qui possède une surface spécifique de plus de 10 $m^2/g$,

b) par le fait que le support est chargé par l'oxyde métallique dans une proportion, calculée en tant que métal des constituants actifs et rapportée au poids du support, d'au moins 5% en poids;

c) par le fait qu'au moins 20% en poids des oxydes métalliques se trouvant sur le support sont présents sous forme finement divisée avec une taille de particules inférieure à 40 nm;

d) par le fait que l'on fait passer les gaz sur le support chargé d'oxyde métallique à une température de 5 à 800 °C;

e) et par le fait que l'on régénère le support chargé de composés métalliques du soufre en faisant circuler des gaz contenant un agent d'oxydation.

2. Procédé selon la revendication 1, caractérisé par le fait que les gaz dont doivent être éliminés les composés du soufre, sont des gaz réducteurs.

3. Procédé selon la revendication 2, caractérisé par le fait que les gaz réducteurs sont constitués par du gaz de houille.

4. Procédé selon la revendication 3, caractérisé par le fait que le gaz de houille contient, lorsqu'il est sous forme d'un gaz sec, les constituants suivants:

25 –50% $H_2$
18 –70% CO
2 –30% $CO_2$
0 –15% $CH_4$
0.01– 5% $H_2S$
< – 2% COS, $CS_2$, HCl, $NH_3$ etc.

5. Procédé selon la revendication 1, caractérisé par le fait que les gaz dont doivent être éliminés les composés du soufre sont constitués par des gaz naturels.

6. Procédé selon l'une ou plusieurs des revendications 1 à 5, caractérisé par le fait que le support est chargé avec l'oxyde métallique dans une proportion, calculée en tant que métal des constituants actifs et rapportée au poids du support, d'au moins 20% en poids, et de préférence, d'au moins 40% en poids.

7. Procédé selon l'une ou plusieurs des revendications 1 à 6, caractérisé par le fait que l'on effectue l'absorption des composés du soufre à des températures de 200 à 800 °C, et de préférence de 300 à 600 °C.

8. Procédé selon l'une ou plusieurs des revendications 1 à 7, caractérisé par le fait que l'oxyde métallique est l'oxyde ferrique.

9. Procédé selon l'une ou plusieurs des revendications 1 à 8, caractérisé par le fait qu'au moins 50% en poids des oxydes métalliques se trouvant sur le support sont présents avec une taille de particules de moins de 40 nm, et de préférence, de moins de 20 nm.

10. Procédé selon l'une ou plusieurs des revendications 1 à 9, caractérisé par le fait que l'on effectue la régénération à des températures de 20 à 700 °C et le cas échéant, en ce que l'on chasse le soufre à des températures supérieures à environ 200 °C.

11. Procédé selon l'une ou plusieurs des revendications 1 à 10, caractérisé par le fait que l'on effectue la régénération à des températures de 200 à 700 °C.

12. Procédé selon l'une ou plusieurs des revendications 1 à 11, caractérisé par le fait que pour la régénération, le gaz utilisé contient moins de 5% en volume d'oxygène.

13. Procédé selon l'une ou plusieurs des revendications 1 à 12, caractérisé par le fait que les gaz contenant des composés du soufre contiennent de l'oxigène dans une proportion telle que le rapport atomique de l'oxygène au soufre ne dépasse pas 1.

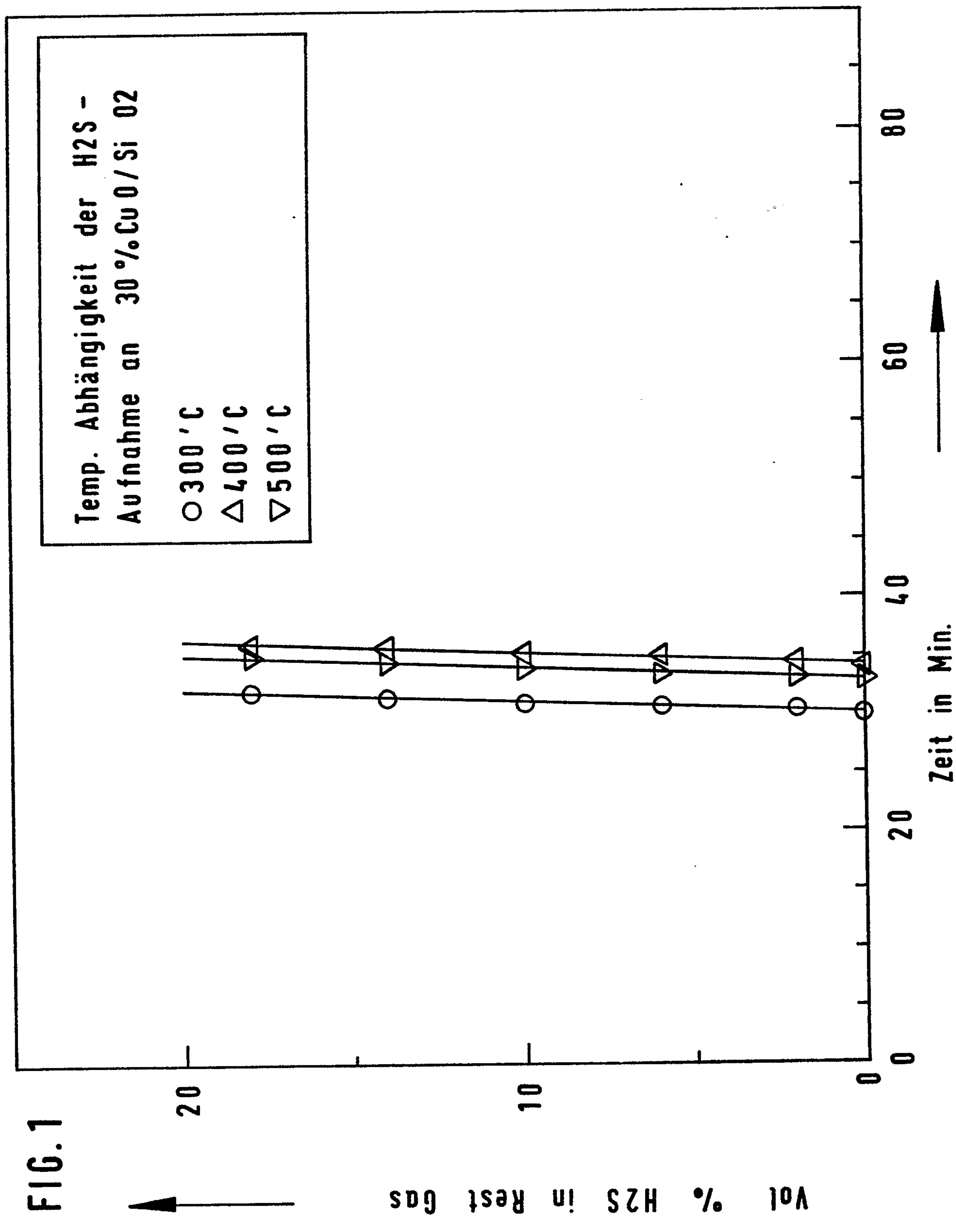
Temp. Abhängigkeit der H2S -
Aufnahme an 30 % CuO/SiO2
○ 300 °C
△ 400 °C
▽ 500 °C
Vol % H2S in Rest Gas
Zeit in Min.
0
10
20
0
20
40
60
80

FIG. 1

FIG. 2

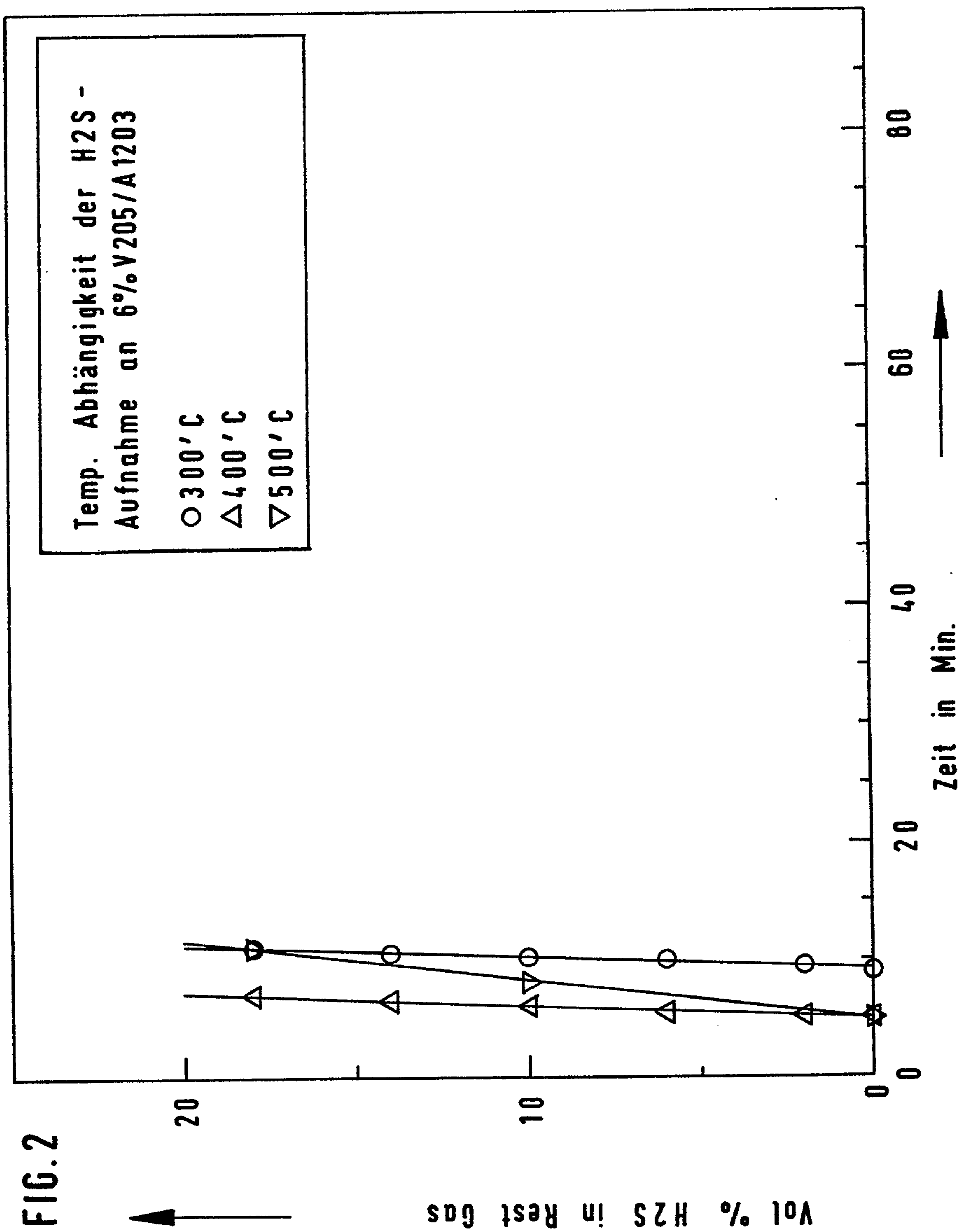
Temp. Abhängigkeit der H2S -
Aufnahme an 6%o V205/A1203
○ 300'C
△ 400'C
▽ 500'C
0
20
40
60
80
Zeit in Min.
0
10
20
Vol % H2S in Rest Gas

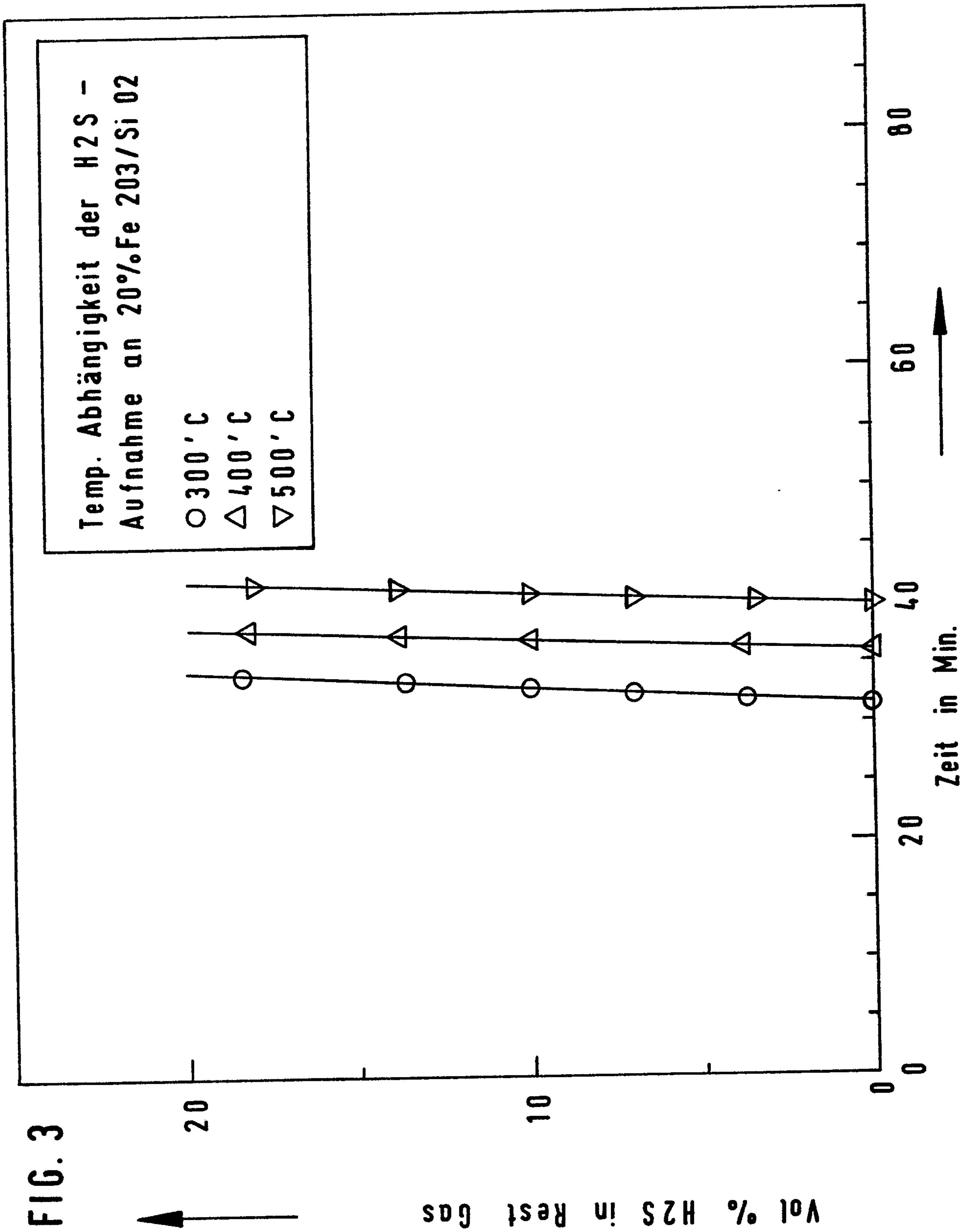

Temp. Abhängigkeit der H2S -
Aufnahme an 20%Fe 203/Si 02
300'C
400'C
500'C
0
20
40
60
80
Zeit in Min.
0
10
20
Vol % H2S in Rest Gas


FIG. 3

FIG. 4

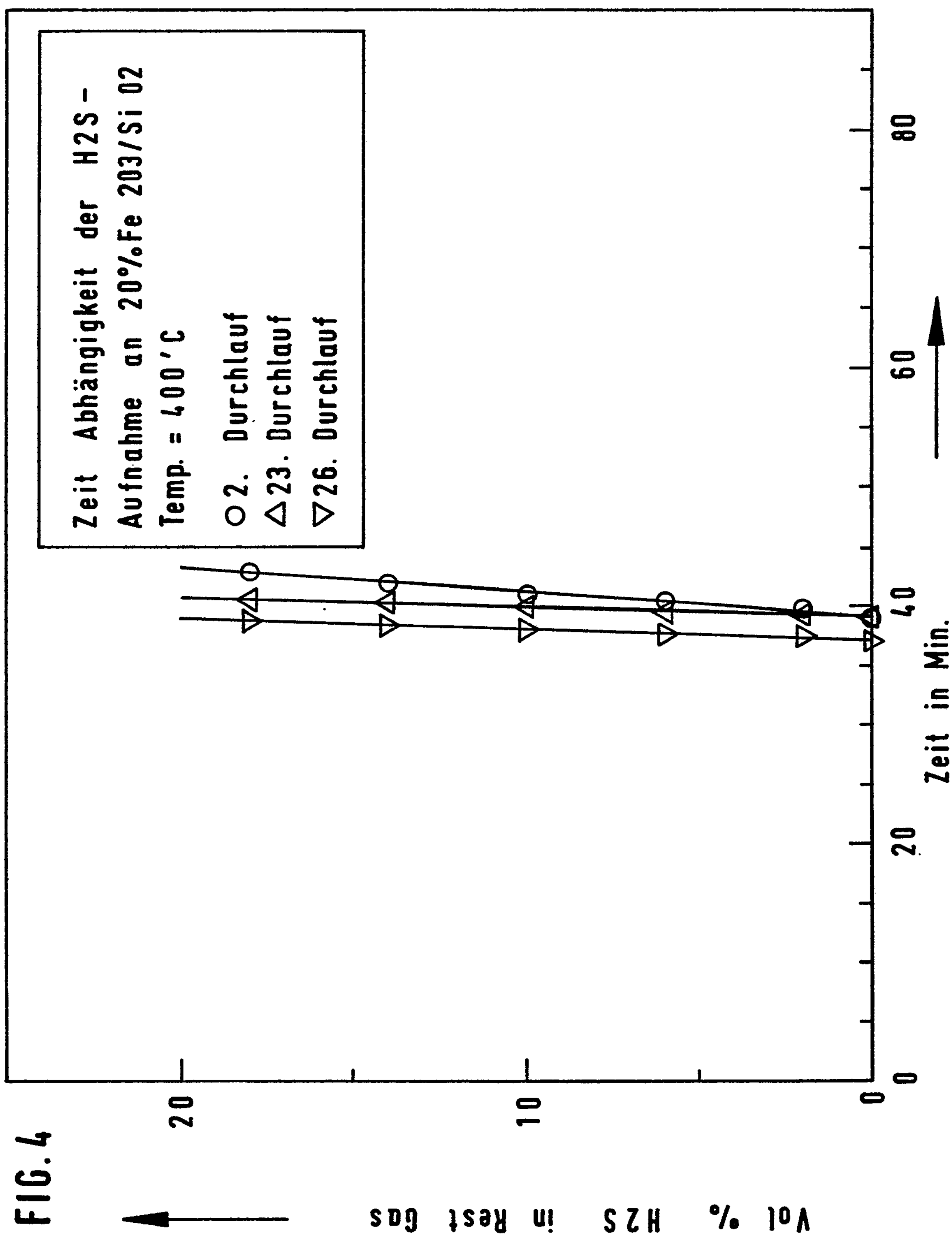
Zeit Abhängigkeit der H2S -
Aufnahme an 20%.Fe 203/Si 02
Temp. = 400 'C
○ 2. Durchlauf
△ 23. Durchlauf
▽ 26. Durchlauf
0
20
40
60
80
Zeit in Min.
0
10
20
Vol % H2S in Rest Gas

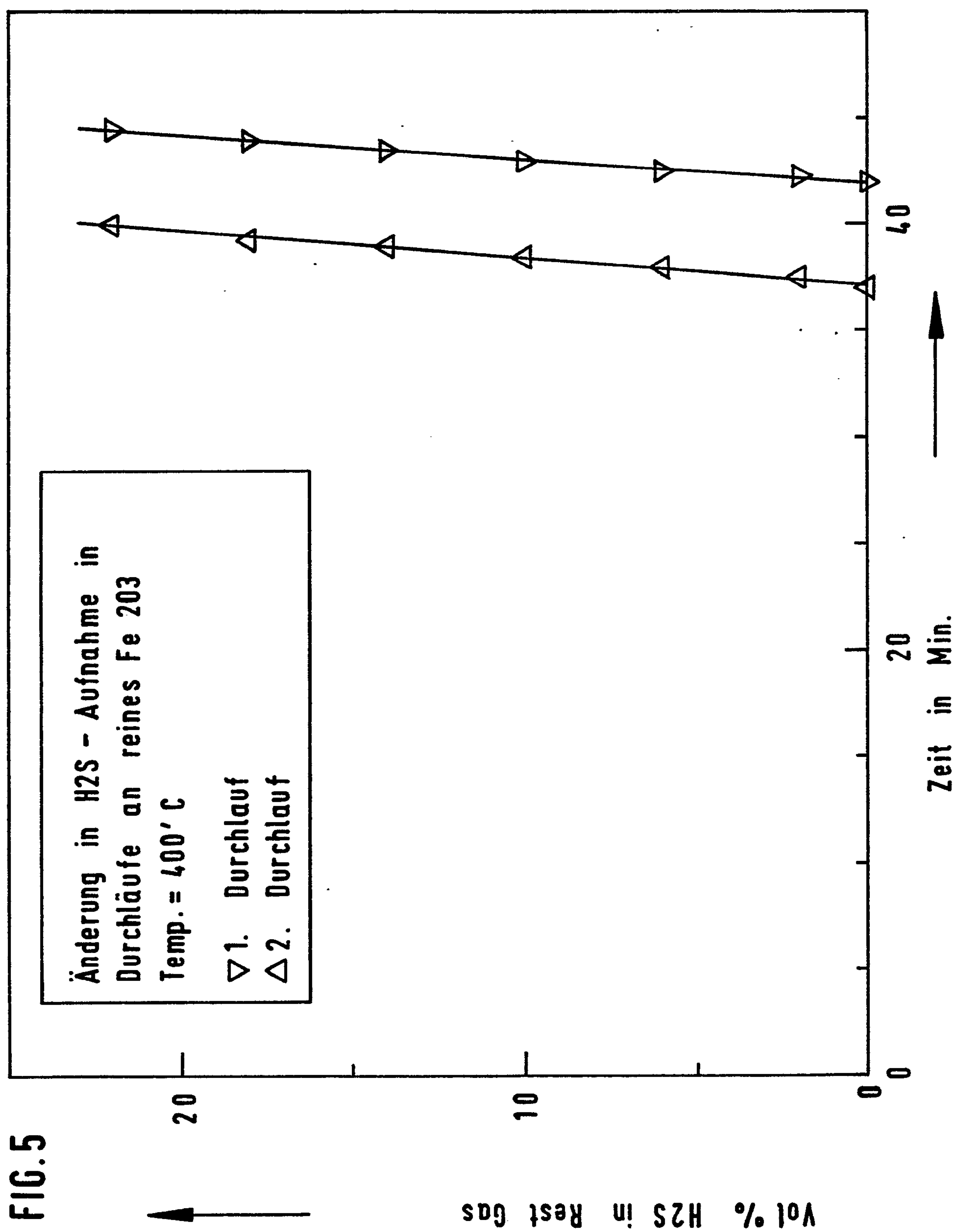
Änderung in H2S - Aufnahme in
Durchläufe an reines Fe 203
Temp. = 400' C
▽ 1. Durchlauf
△ 2. Durchlauf
0
10
20
40
Zeit in Min.
Vol % H2S in Rest Gas

FIG.5

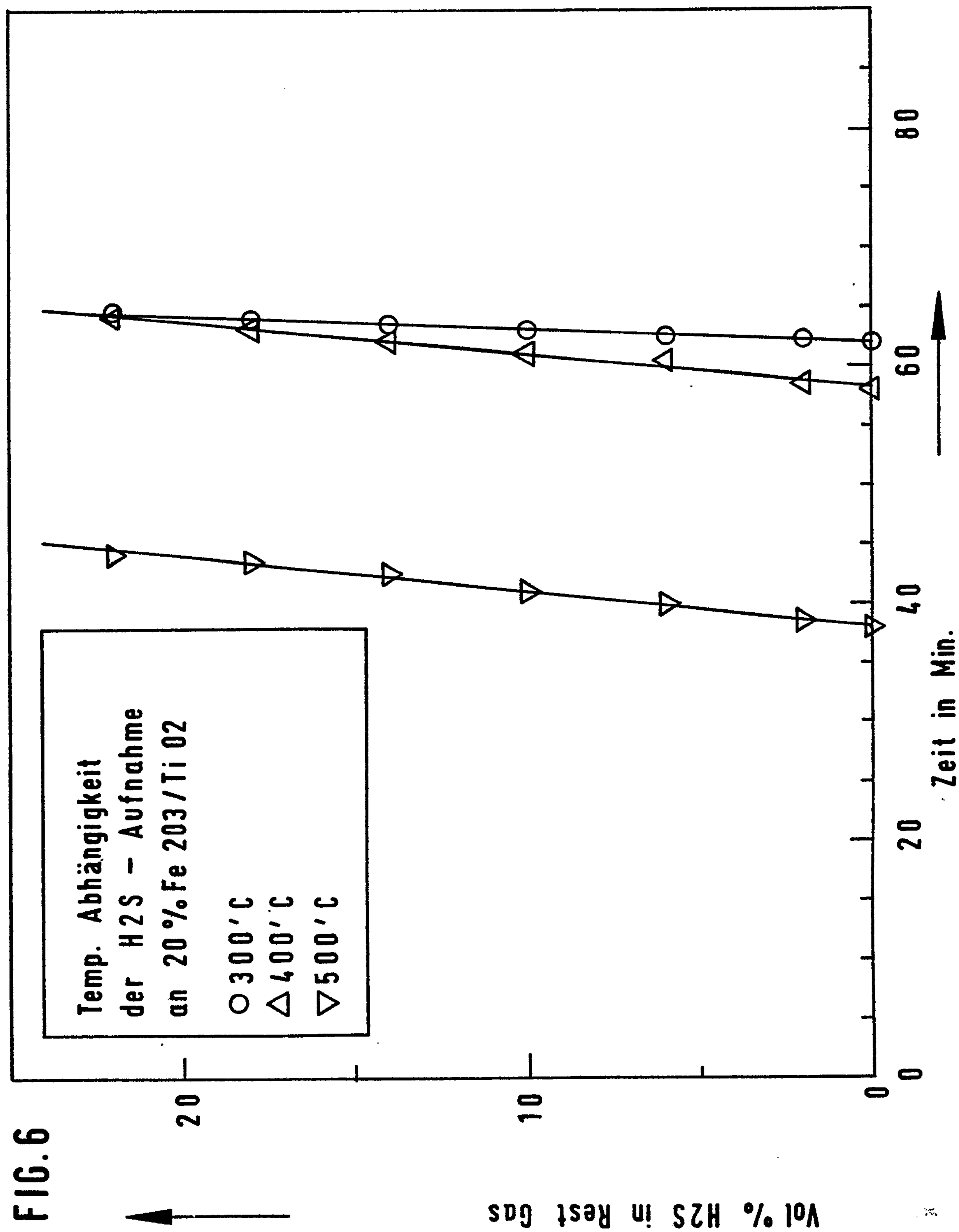
Temp. Abhängigkeit
der H2S - Aufnahme
an 20 % Fe 203/Ti 02
○ 300'C
△ 400'C
▽ 500'C
20
10
0
0
20
40
60
80
Zeit in Min.
Vol % H2S in Rest Gas

FIG. 6

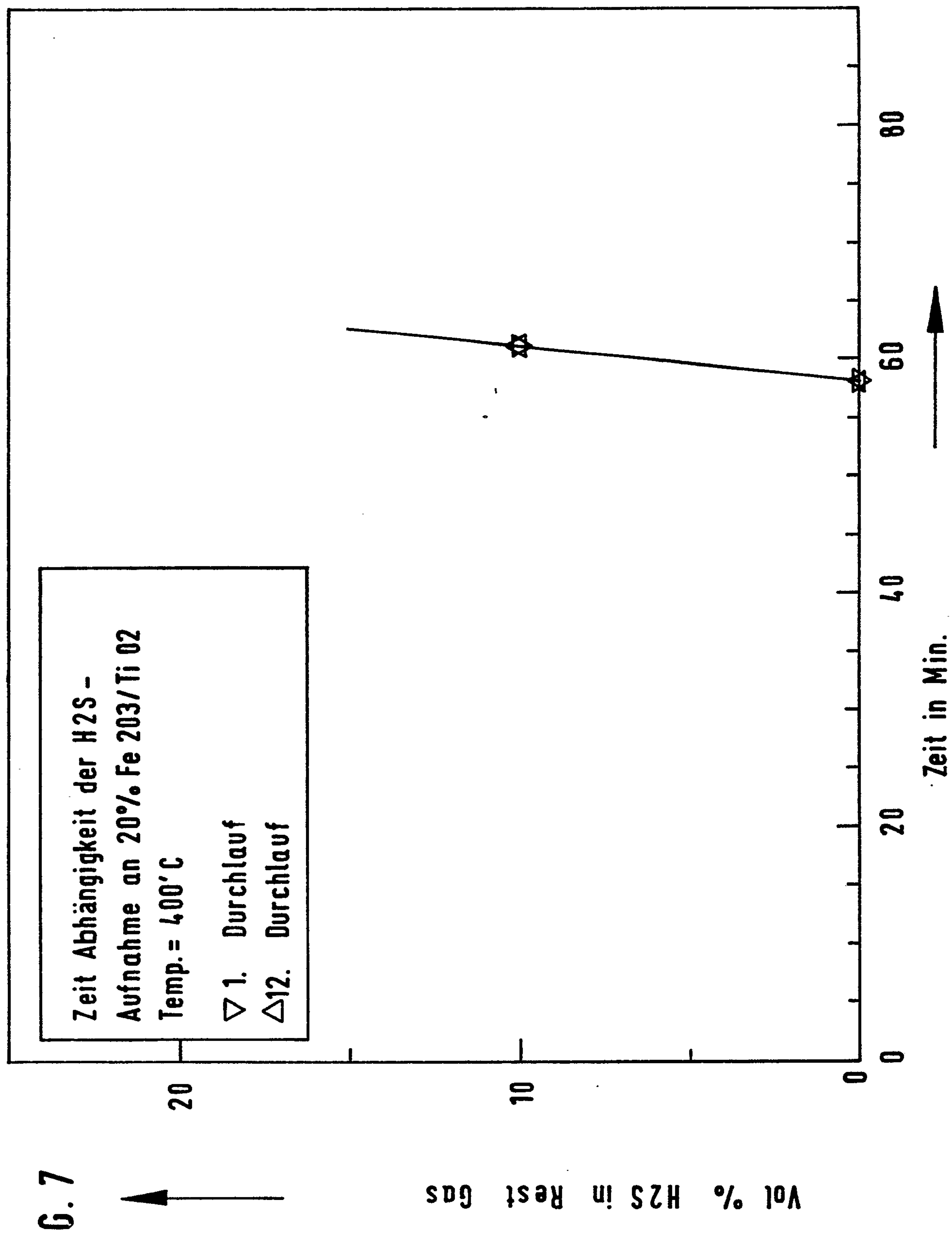
Zeit Abhängigkeit der H2S -
Aufnahme an 20% Fe 203/Ti 02
Temp. = 400°C
▽1. Durchlauf
△12. Durchlauf
0
20
40
60
80
Zeit in Min.
0
10
20
Vol % H2S in Rest Gas

FIG. 7

FIG. 8

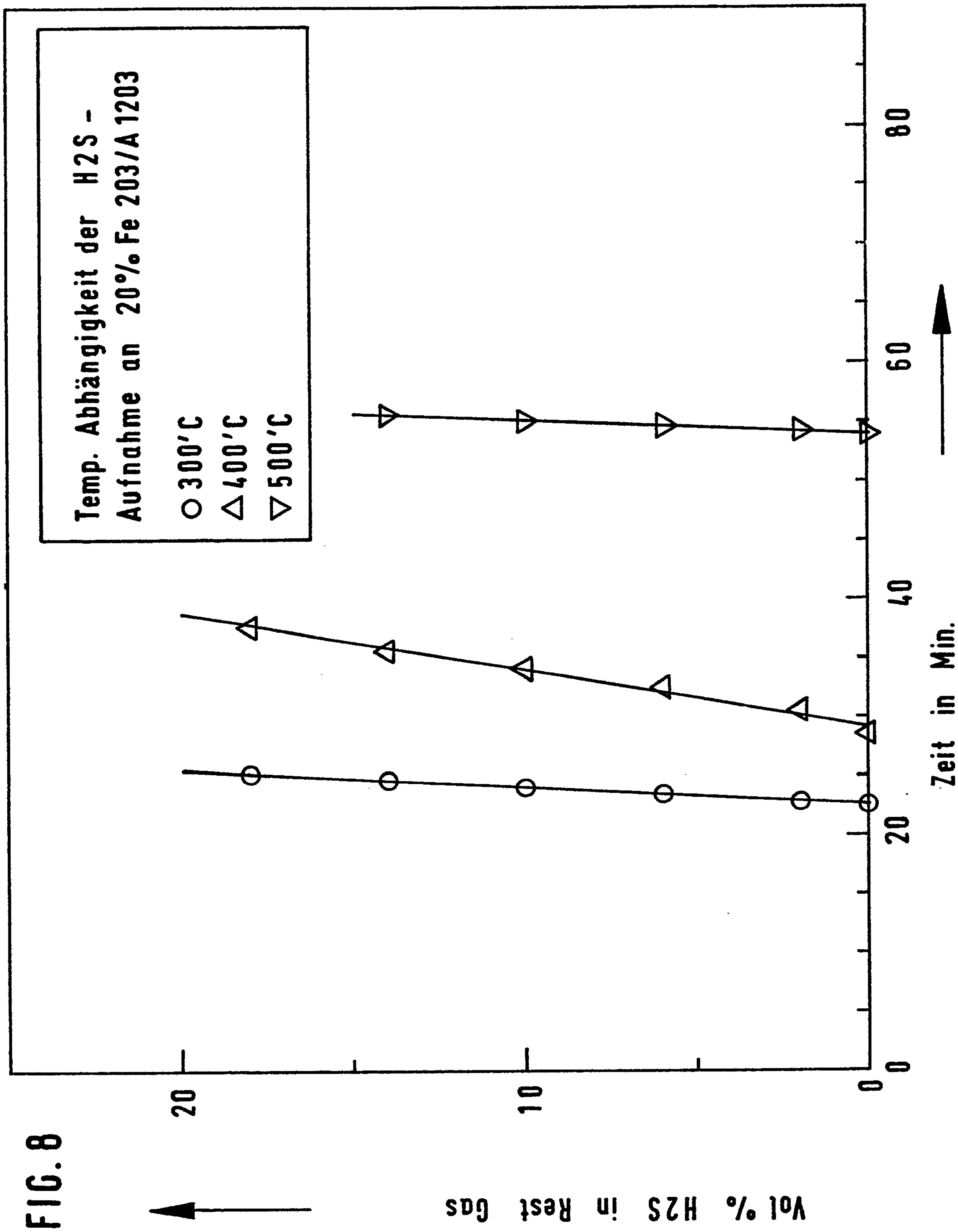

Temp. Abhängigkeit der H2S -
Aufnahme an 20%. Fe 2O3/Al2O3
○ 300°C
△ 400°C
▽ 500°C
0
20
40
60
80
Zeit in Min.
0
10
20
Vol % H2S in Rest Gas

FIG. 9

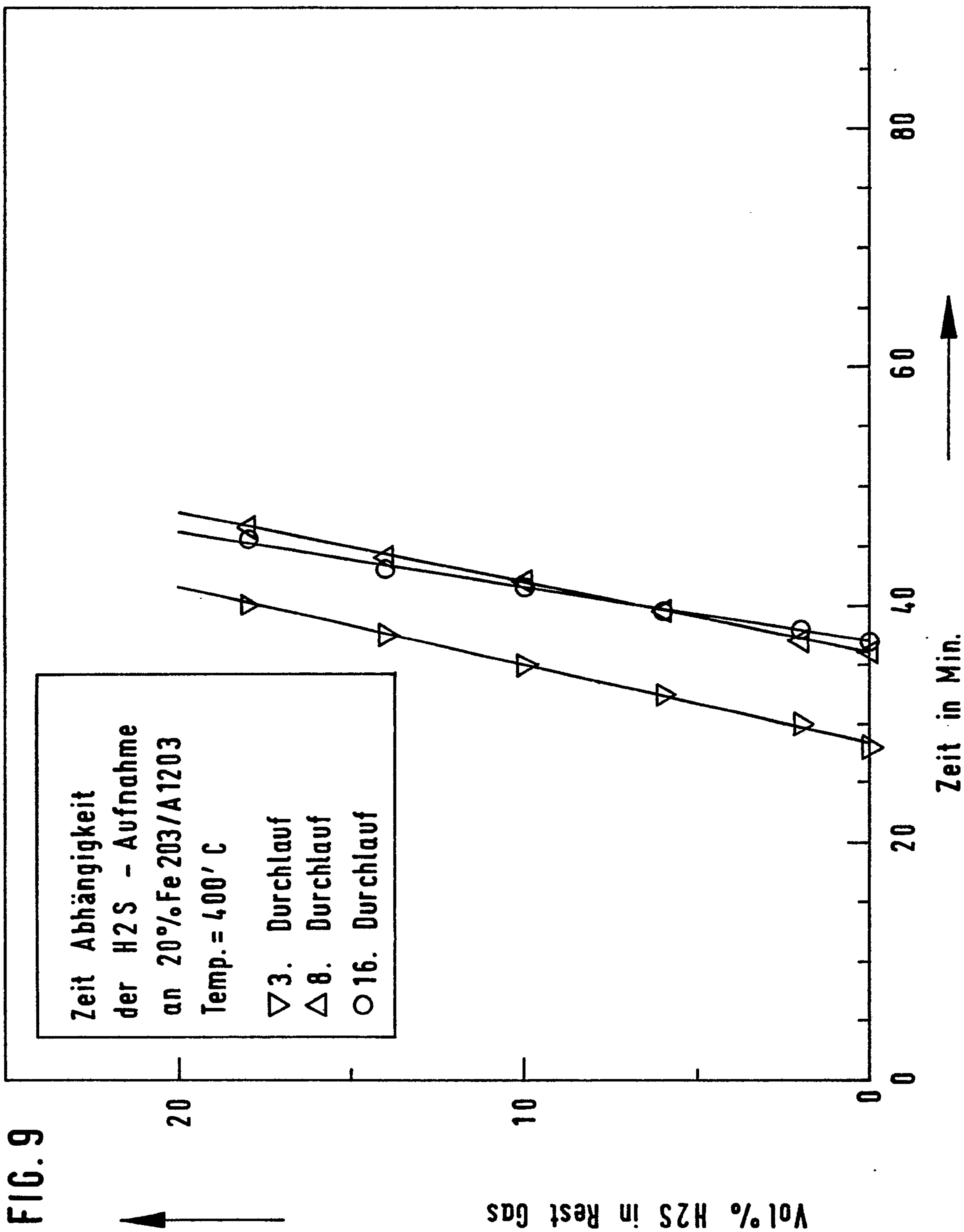
Zeit Abhängigkeit
der H2S - Aufnahme
an 20%Fe 203/A1203
Temp. = 400' C
▽3. Durchlauf
△8. Durchlauf
○16. Durchlauf
Zeit in Min.
Vol % H2S in Rest Gas
0
10
20
0
20
40
60
80

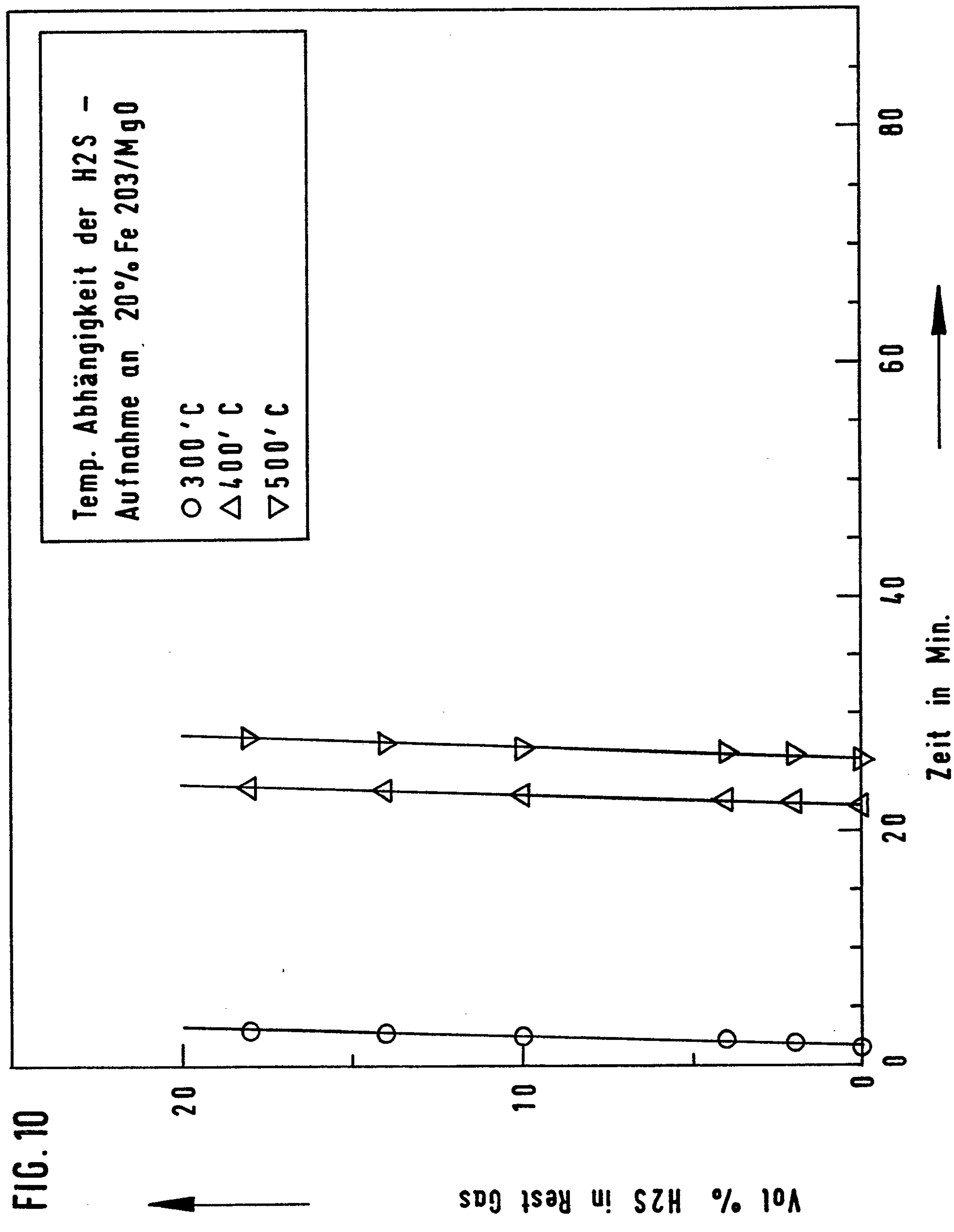

Temp. Abhängigkeit der H2S –
Aufnahme an 20% Fe 203/MgO
○ 300 ’C
△ 400 ’C
▽ 500 ’C
Zeit in Min.
0
20
40
60
80
Vol % H2S in Rest Gas
0
10
20


FIG. 10

FIG. 11

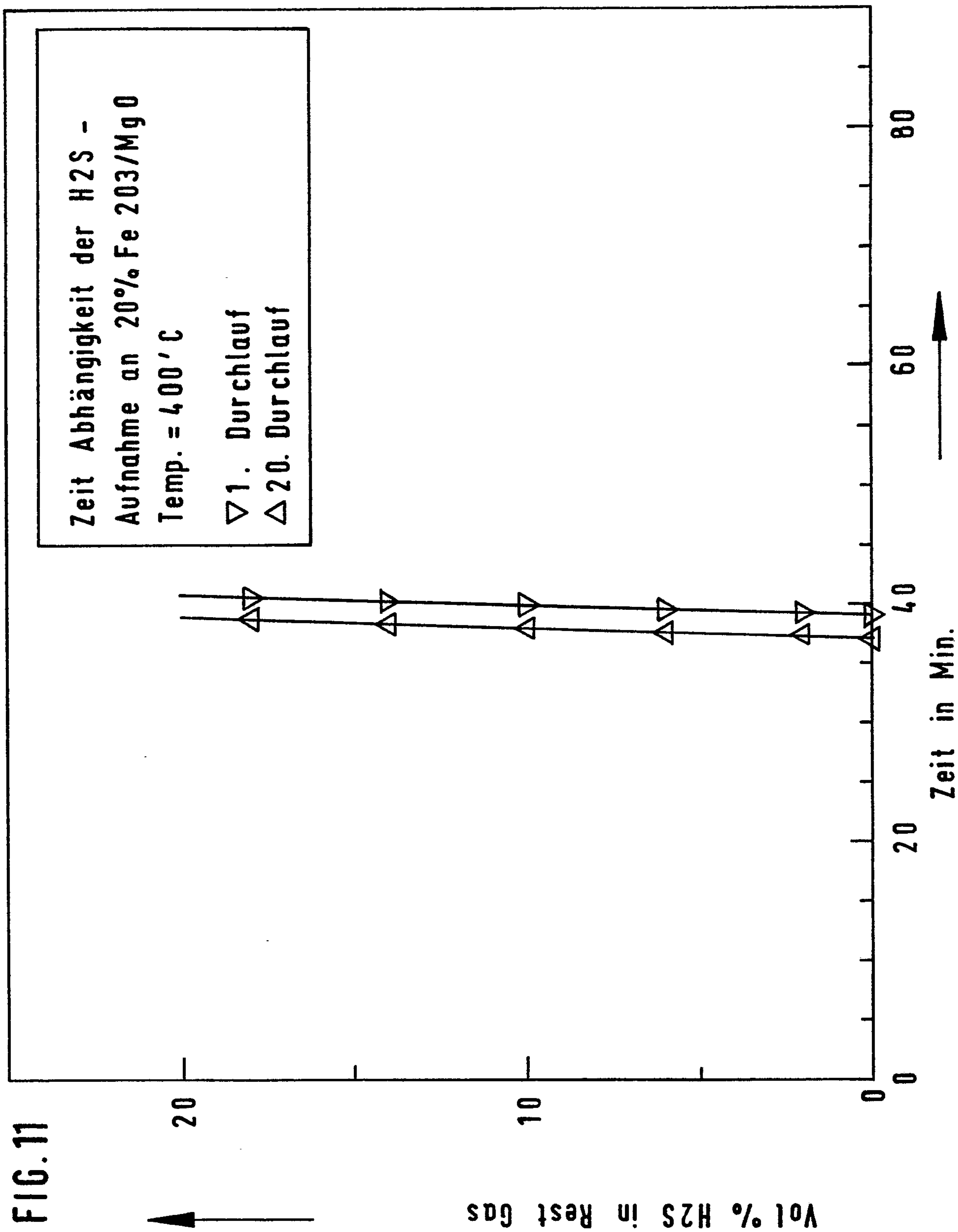
Zeit Abhängigkeit der H2S -
Aufnahme an 20% Fe 203/Mg0
Temp. = 400 'C
▽1. Durchlauf
△20. Durchlauf
Vol % H2S in Rest Gas
Zeit in Min.
0
10
20
0
20
40
60
80

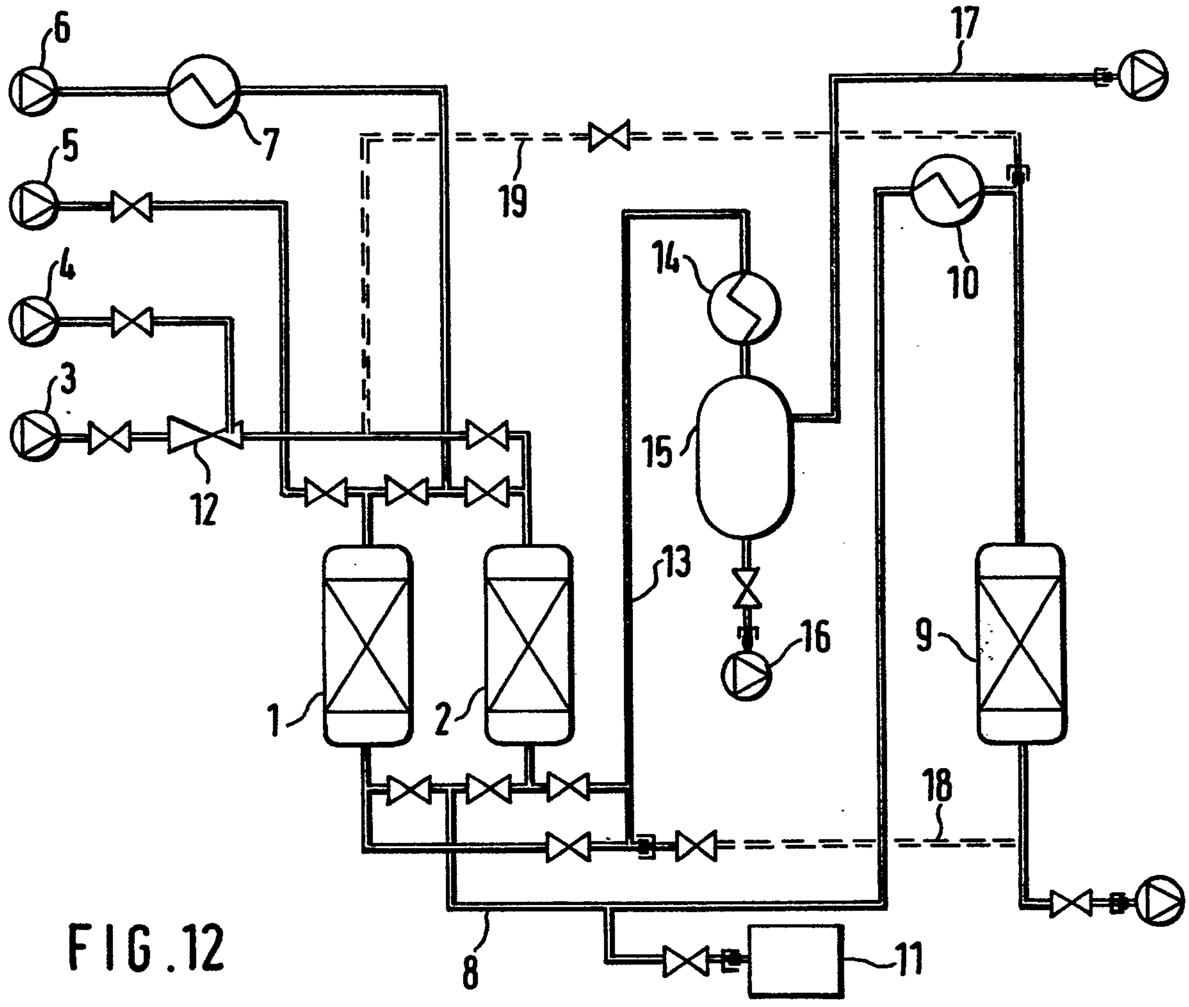


FIG.12

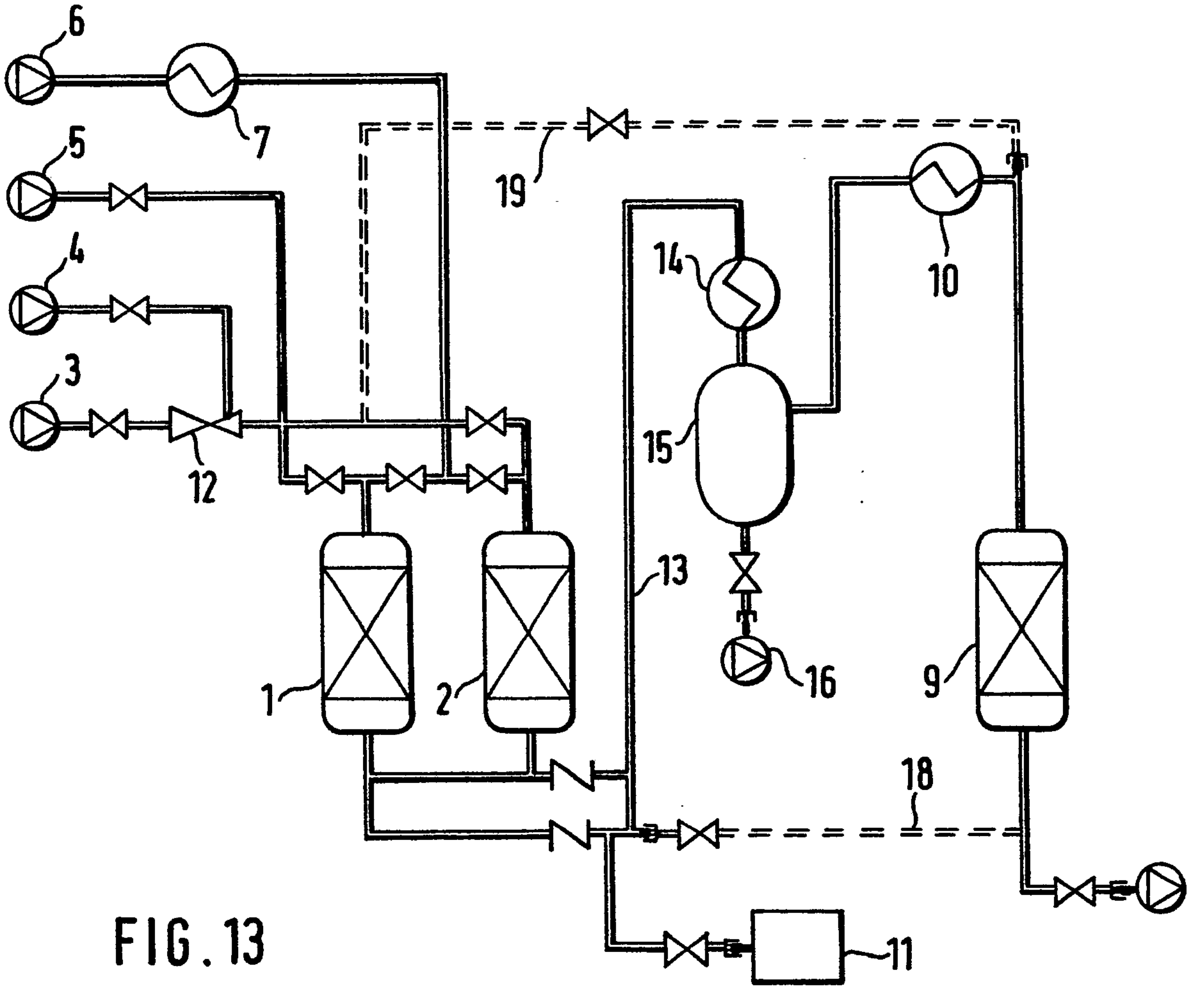


FIG. 13